(19)

Europäisches Patentamt

European Patent Office

Office européen des brevets

(11)  **EP 4 693 937 A2**

(12)  **EUROPEAN PATENT APPLICATION**
published in accordance with Art. 153(4) EPC

(43) Date of publication:
**11.02.2026   Bulletin 2026/07**

(21) Application number: **24785124.9**

(22) Date of filing: **01.04.2024**

(51) International Patent Classification (IPC):
*H04B 7/06* (2006.01)      *H04B 7/08* (2006.01)
*H04W 52/02* (2009.01)    *H04W 52/36* (2009.01)
*H04W 72/04* (2023.01)    *H04W 72/12* (2023.01)

(52) Cooperative Patent Classification (CPC):
**H04B 7/06; H04B 7/08; H04W 52/02; H04W 52/36;
H04W 72/04; H04W 72/12**

(86) International application number:
**PCT/KR2024/004135**

(87) International publication number:
**WO 2024/210417 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023   KR 20230045667
12.05.2023   KR 20230061860
07.08.2023   KR 20230103146**

(71) Applicant: **LG Electronics Inc.
Yeongdeungpo-gu
Seoul 07336 (KR)**

(72) Inventors:
• **KIM, Seonwook**
  **Seoul 06772 (KR)**
• **MYUNG, Sechang**
  **Seoul 06772 (KR)**
• **LEE, Youngdae**
  **Seoul 06772 (KR)**
• **YANG, Suckchel**
  **Seoul 06772 (KR)**
• **KANG, Jiwon**
  **Seoul 06772 (KR)**

(74) Representative: **Plasseraud IP
104 Rue de Richelieu
CS92104
75080 Paris Cedex 02 (FR)**

(54)  **DEVICE AND METHOD FOR REPORTING CHANNEL STATE INFORMATION ON BASIS OF
SUB-CONFIGURATIONS IN WIRELESS COMMUNICATION SYSTEM**

(57)   The purpose of the present disclosure is to report channel state information (CSI) on the basis of sub-configurations in a wireless communication system, and the method performed by a terminal may comprise the steps of: receiving configuration information regarding a CSI report, including a list of a plurality of sub-configurations; and transmitting, to a base station, at least one piece of CSI including a measurement result based on at least one CSI-RS associated with the CSI report.

FIG. 22

**EP 4 693 937 A2**

**Description**

**TECHNICAL FIELD**

The following description relates to a wireless communication system, and to a device and method for reporting channel state information (CSI) based on sub-configurations in a wireless communication system.

**BACKGROUND ART**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.
In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

**DISCLOSURE**

**TECHNICAL PROBLEM**

The present disclosure relates to a device and a method for effectively reporting channel state information (CSI) based on sub-configurations in a wireless communication system.
The present disclosure relates to a device and a method for reducing an overhead of CSI reporting based on sub-configurations in a wireless communication system.
The present disclosure relates to a device and a method for transmitting CSIs corresponding to sub-configurations in a distributed manner in a wireless communication system.
The present disclosure relates to a device and a method for configuring occasions for transmitting CSIs corresponding to sub-configurations in a wireless communication system.
The present disclosure relates to a device and a method for signaling information related to occasions for transmitting CSIs corresponding to sub-configurations in a wireless communication system.
The present disclosure relates to a device and a method for signaling information related to occasions for transmitting CSIs corresponding to sub-configurations in a wireless communication system.
The present disclosure relates to a device and a method for generating a CSI sub-report transmitted in a plurality of occasions in a wireless communication system.
The present disclosure relates to a device and a method for generating a plurality of CSI sub-reports based on CSIs corresponding to sub-configurations in a wireless communication system.
The present disclosure relates to a device and a method for generating one CSI sub-report by combining CSIs corresponding to sub-configurations in a wireless communication system.
The present disclosure relates to a device and a method for transmitting CSIs corresponding to sub-configurations in a plurality of occasions according to a priority in a wireless communication system.
The technical objectives to be achieved in the present disclosure are not limited to the matters mentioned above, and other technical tasks not mentioned may be considered by those skilled in the art in the technical field to which the technical configuration of the present disclosure is applied, from the embodiments of the present disclosure to be described below.

**TECHNICAL SOLUTION**

In one example of the present disclosure, a method performed by a UE in a wireless communication system may comprise: receiving configuration information for a channel state information (CSI) report including a list of a plurality of sub-configurations; and transmitting, to a base station, at least one CSI including a measurement result based on at least one CSI-RS related to the CSI report. The sub-configurations may be divided by at least one of a related power offset or a number of antenna ports, a first CSI sub-report determined based on the at least one CSI may be transmitted at a first occasion among occasions determined based on the configuration information, and a second CSI sub-report determined based on the at least one CSI may be transmitted at a second occasion among the occasions.

In one example of the present disclosure, a method performed by a UE in a wireless communication system may comprise a transceiver and a processor connected to the transceiver, wherein the processor may be configured to: receive configuration information for a channel state information (CSI) report including a list of a plurality of sub-configurations; and transmit, to a base station, at least one CSI including a measurement result based on at least one CSI-RS related to the CSI report, wherein the sub-configurations may be divided by at least one of a related power offset or a number of antenna ports, a first CSI sub-report determined based on the at least one CSI may be transmitted at a first occasion among occasions determined based on the configuration information, and a second CSI sub-report determined based on the at least one CSI may be transmitted at a second occasion among the occasions.

In one example of the present disclosure, a communication device may comprise at least one processor, and at least one computer memory connected to the at least one processor and storing instructions that direct operations when executed by the at least one processor, the operations comprising: receiving configuration information for a channel state information (CSI) report including a list of a plurality of sub-configurations; and transmitting, to a base station, at least one CSI including a measurement result based on at least one CSI-RS related to the CSI report, wherein the sub-configurations may be divided by at least one of a related power offset or a number of antenna ports, a first CSI sub-report determined based on the at least one CSI may be transmitted at a first occasion among occasions determined based on the configuration information, and a second CSI sub-report determined based on the at least one CSI may be transmitted at a second occasion among the occasions.

In one example of the present disclosure, a non-transitory computer-readable medium storing at least one instruction may comprise the at least one instruction executable by a processor, wherein the at least one instruction causing a device, the processor, to: receive configuration information for a channel state information (CSI) report including a list of a plurality of sub-configurations; and transmit, to a base station, at least one CSI including a measurement result based on at least one CSI-RS related to the CSI report, wherein the sub-configurations may be divided by at least one of a related power offset or a number of antenna ports, a first CSI sub-report determined based on the at least one CSI may be transmitted at a first occasion among occasions determined based on the configuration information, and a second CSI sub-report determined based on the at least one CSI may be transmitted at a second occasion among the occasions.

The aspects described above of the present disclosure are merely some of the preferred embodiments of the present disclosure, and various embodiments reflecting the technical features of the present disclosure may be derived and understood by those skilled in the art based on the detailed description of the present disclosure described below.

## ADVANTAGEOUS EFFECTS

The following effects may be achieved by embodiments based on the present disclosure.

According to the present disclosure, the overhead of channel state information (CSI) reporting may be controlled.

The effects obtainable from the embodiments of the present disclosure are not limited to the effects mentioned above, and other effects not mentioned may be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

## BRIEF DESCRIPTION OF THE DRAWINGS

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical

channels.

FIG. 8 illustrates a diagram illustrating an example in which a physical channel is mapped in a slot to which various embodiments are applicable.

FIG. 9 illustrates an example of beams applicable to the present disclosure.

FIG. 10 illustrates an example of a downlink (DL) beam management (BM) procedure using a synchronization signal block (SSB) applicable to the present disclosure.

FIG. 11 illustrates an example of a DL BM procedure using a channel state information (CSI) reference signal (RS) applicable to the present disclosure.

FIG. 12 illustrates an example of a receive beam determination procedure of a UE applicable to the present disclosure.

FIG. 13 illustrates an example of a transmit beam determination procedure of a base station applicable to the present disclosure.

FIG. 14 illustrates an example of resource allocation in a time and frequency domain applicable to the present disclosure.

FIG. 15 illustrates an example of beam sweeping for uplink (UL) BM using a sounding reference signal (SRS) applicable to the present disclosure.

FIG. 16 illustrates an example of a UL BM procedure using an SRS applicable to the present disclosure.

FIG. 17 illustrates an example of an operation procedure of a base station supporting a network energy saving (NES) technology applicable to the present disclosure.

FIG. 18 illustrates an example of a procedure for CSI measurement and reporting applicable to the present disclosure.

FIG. 19a to FIG. 19c illustrate examples of states of antenna elements according to an embodiment of the present disclosure.

FIG. 20 illustrates an example of a procedure for reporting CSIs for sub-configurations in a plurality of occasions according to an embodiment of the present disclosure.

FIG. 21 illustrates an example of a procedure for reporting CSIs for sub-configurations in a plurality of occasions having different resource sizes according to an embodiment of the present disclosure.

FIG. 22 illustrates an example of a procedure for transmitting a CSI report based on sub-configurations according to an embodiment of the present disclosure.

## MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial.

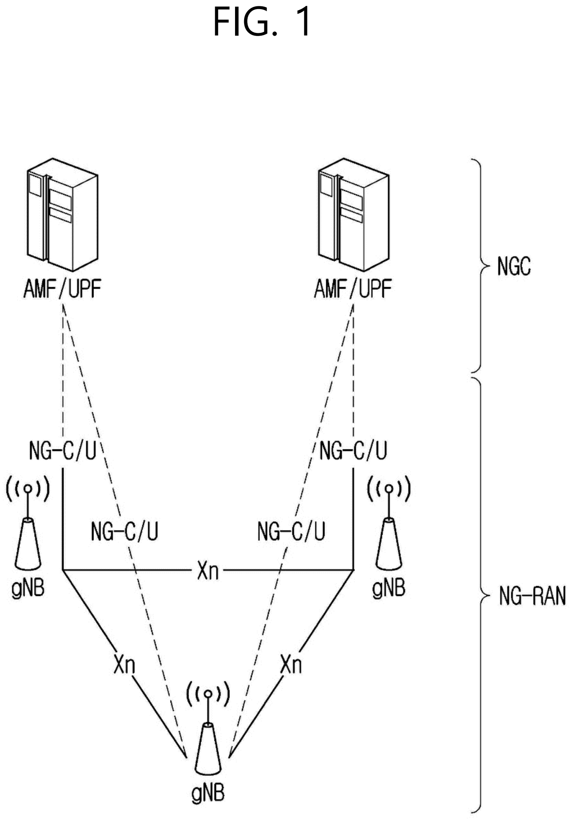

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

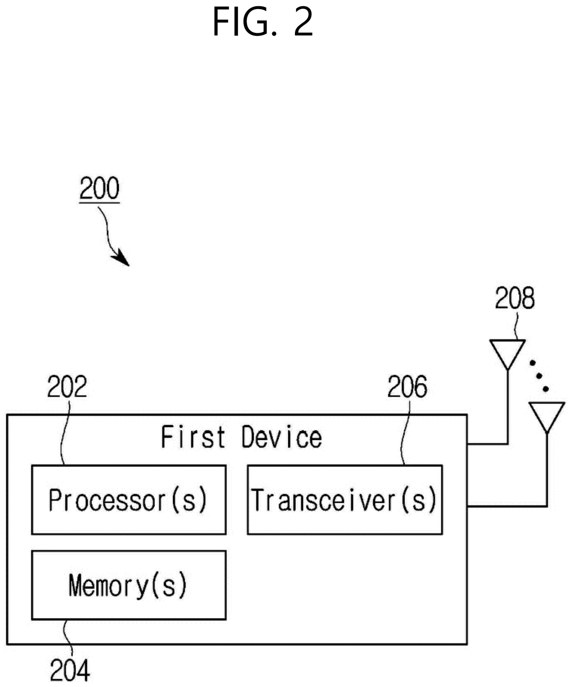

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

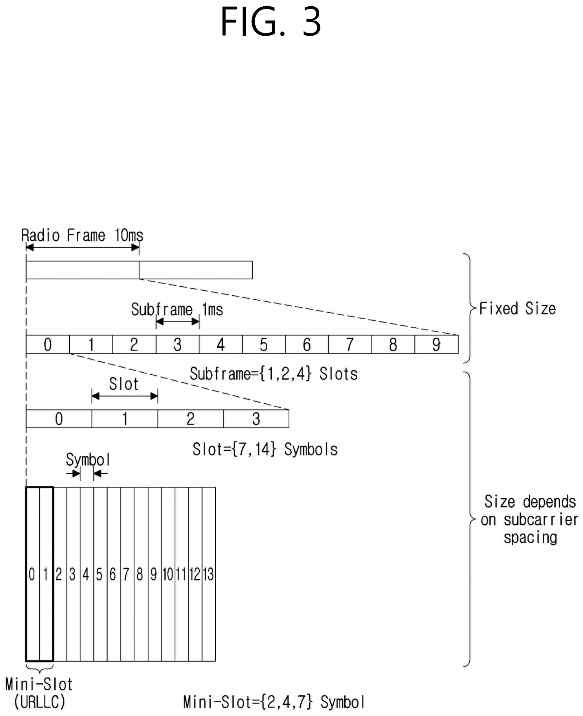

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or μ). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n_s^{\mu} \in \{0, ..., N_{slot}^{subframe,\mu}-1\}$ in a subframe and are numbered in an increasing order of $n_{s,f}^{\mu} \in \{0, , N_{slot}^{subframe,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

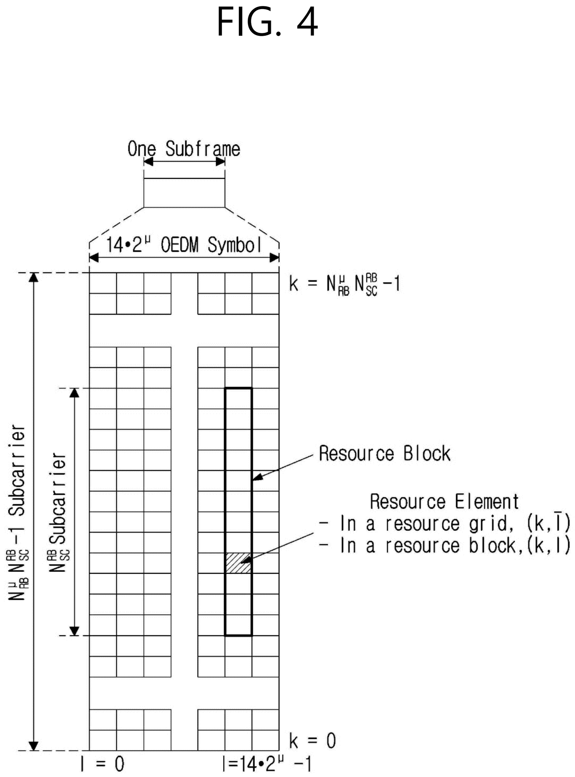

FIG. 4 exemplifies a resource grid in a wireless communication system to which the present disclosure may be applied.

Referring to FIG. 4, as an illustrative description, a resource grid is configured with $N_{RB}^{\mu}N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu}N_{symb}^{(\mu)}$ OFDM symbols and $N_{RB}^{\mu}N_{SC}^{RB}$ subcarriers. Here, $N_{RB}^{\mu} \leq N_{RB}^{max,u}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, k=0, ..., $N_{RB}^{\mu}N_{SC}^{RB}$-1 is an index in a frequency domain and l'=0, ..., $2^{\mu}N_{symb}^{(\mu)}$-1 refers to a position of a symbol in a subframe. When referring to a resource element in a slot, an index pair (k, 1) is used. Here, l=0, ..., $2^{\mu}N_{symb}^{(\mu)}$-1. A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, 1) for a subcarrier spacing configuration $\mu$ in a frequency domain is given as in the following Equation 1.

[Equation 1]

$$n_{CRB}^{\mu}=k/N_{sc}^{RB}$$

In Equation 1, k is defined relatively to point A so that k=0 corresponds to a subcarrier centering around point A. Physical resource blocks are numbered from 0 to $N_{BWP,i}^{size,\mu}-1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

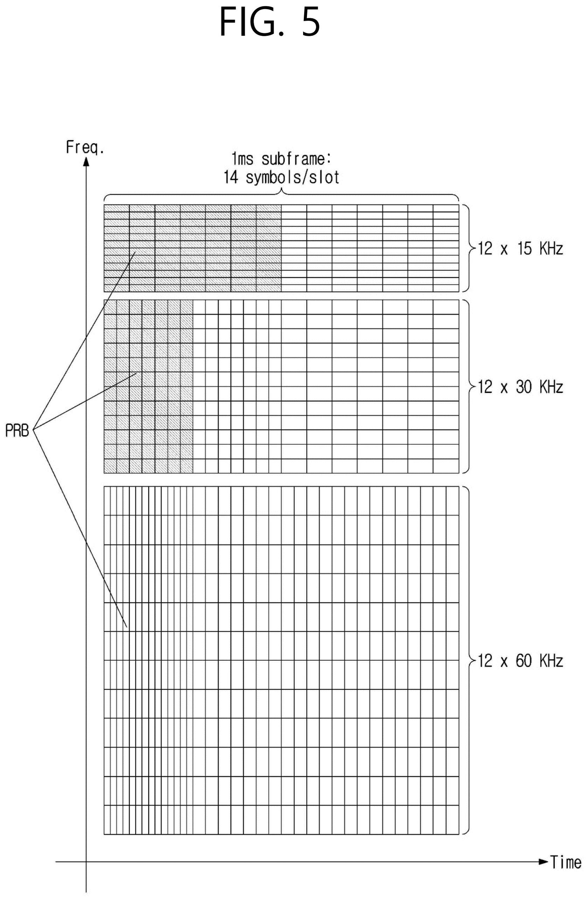

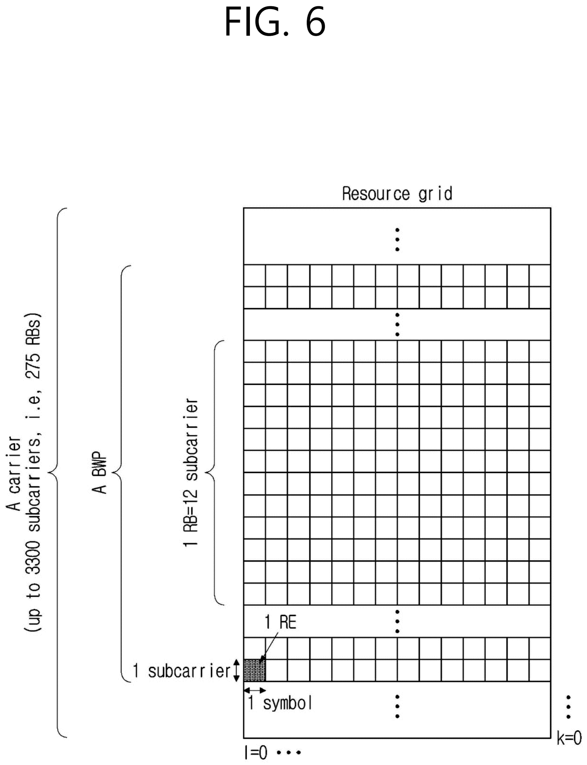

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

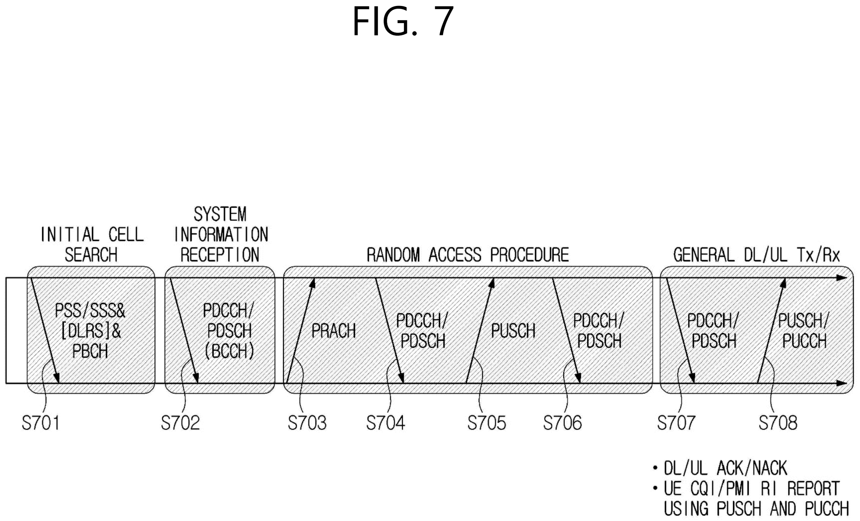

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

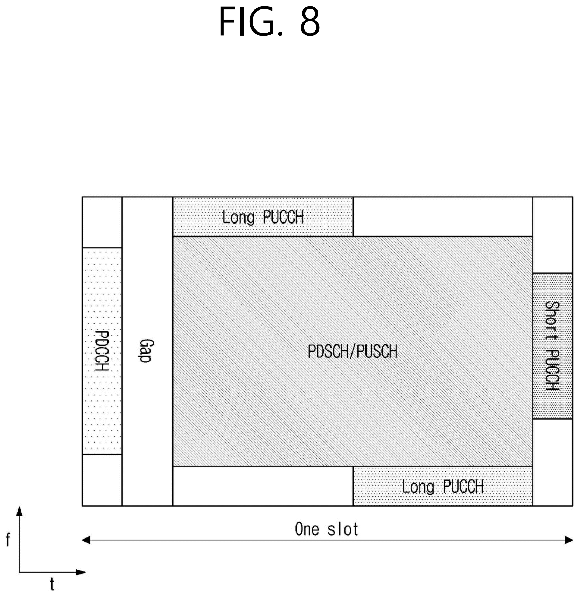

FIG. 8 is a diagram illustrating an example in which a physical channel is mapped in a slot to which various embodiments are applicable.

Referring to FIG. 8, a DL control channel, DL or UL data, UL control channel, etc. may all be included in one slot. For example, the first N symbols in a slot may be used to transmit a DL control channel (hereinafter, DL control region), and the last M symbols in a slot may be used to transmit a UL control channel (hereinafter, UL control region). N and M are each an integer greater than or equal to 0. A resource region (hereinafter, referred to as a data region) between the DL control region and the UL control region may be used for DL data transmission or for UL data transmission. A time gap for DL-to-UL or UL-to-DL switching may exist between the control region and the data region. The PDCCH may be transmitted in the DL control region, and the PDSCH may be transmitted in the DL data region. Some symbols at the time of switching from DL to UL in a slot may be used as a time gap.

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time-/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 5 shows DCI formats transmitted over the PDCCH.

[Table 5]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 6 shows the usage of the PDCCH and transport channels according to the type of RNTI. Here, the transport channel means a transport channel related to data carried by a PDSCH/PUSCH scheduled by the PDCCH.

[Table 6]

| RNTI | Usage | Transport Channel |
|---|---|---|
| P-RNTI | Paging and System Information change notification | PCH (Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS (Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |

(continued)

| RNTI | Usage | Transport Channel |
|---|---|---|
| CS (Configured | Configured scheduled unicast transmission (activation, | DL-SCH, UL-SCH |
| Scheduling)-RNTI | reactivation and retransmission) | |
| CS-RNTI | Configured scheduled unicast transmission(deactivation) | N/A |
| TPC (Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI (Slot Format Indication)-RNTI | Slot Format Indication on the given cell | N/A |
| SP (Semi-persistent)-CSI (Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (=6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 7 shows PDCCH search spaces.

[Table 7]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | PagingSystem Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

Uplink (UL) Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

Scheduling request (SR): The SR is information used to request a UL-SCH resource.

Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.

Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 8 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 8]

| PUCCH format | Length in OFDM symbols $N_{symb}^{PUCCH}$ | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1 - 2 | >2 | HARQ, CSI, [SR] | CP-OFDM |
| 3 | 4-14 | >2 | HARQ, CSI, [SR] | DFT-s-OFDM (no UE multiplexing) |

(continued)

| PUCCH format | Length in OFDM symbols $N_{symb}^{PUCCH}$ | Number of bits | Usage | Etc |
|---|---|---|---|---|
| 4 | 4-14 | >2 | HARQ, CSI, [SR] | DFT-s-OFDM (Pre DFT OCC) |

(0) PUCCH Format 0 (PF0)
- Supportable UCI payload size: up to K bits (e.g., K=2)
- Number of OFDM symbols included in one PUCCH: 1 to X symbols (e.g., X=2)
- Transmission structure: only a UCI signal is configured with no DM-RS, and a UCI state is transmitted by selecting and transmitting one of a plurality of sequences.
(1) PUCCH Format 1 (PF1)
- Supportable UCI payload size: up to K bits (e.g., K=2)
- Number of OFDM symbols included in one PUCCH: Y to Z symbols (e.g., Y=4 and Z=14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).
(2) PUCCH Format 2 (PF2)
- Supportable UCI payload size: more than K bits (e.g., K=2)
- Number of OFDM symbols included in one PUCCH: 1 to X symbols (e.g., X=2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.
(3) PUCCH Format 3 (PF3)
- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.
(4) PUCCH Format 4 (PF4 or F4)
- Supportable UCI payload size: more than K bits (e.g., K=2)
- Number of OFDM symbols included in one PUCCH: Y to Z symbols (e.g., Y=4 and Z=14)
- Transmission structure: UCI and a DMRS are configured/mapped in/to different symbols based on TDM. The DFT is applied to encoded UCI bits with no multiplexing between UEs.

Beam Management (BM)

The BM procedure is an L1 (layer 1) / L2 (layer 2) procedure for obtaining and maintaining a set of base station (e.g., gNB, TRP, etc.) and/or terminal (e.g., UE) beams that may be used for downlink (DL) and uplink (UL) transmission/reception, and may include the following procedures and terms.

- Beam measurement: The operation in which a base station or a UE measures characteristics of a received beam forming signal.
- Beam determination: The operation in which a base station or a UE selects its transmit beam (Tx beam) / receive beam (Rx beam).
- Beam sweeping: The operation in which a transmit and/or receive beam is used to cover a spatial domain for a certain time interval in a predetermined manner.
- Beam report: The operation in which a UE reports information of a beamformed signal based on beam measurement.

The BM procedure may be classified into (1) a DL BM procedure using a synchronization signal (SS) / physical broadcast channel (PBCH) block or a CSI-RS, and (2) a UL BM procedure using a sounding reference signal (SRS).
In addition, each BM procedure may include Tx beam sweeping for determining a Tx beam and Rx beam sweeping for determining an Rx beam.

<DL BM>

The DL BM procedure may include (1) transmission of beamformed DL reference signals (RSs) (e.g., CSI-RS or SS block (SSB)) of a base station, and (2) beam reporting of a UE.

Here, the beam reporting may include a preferred DL RS identifier (ID)(s) and a corresponding L1-reference signal received power (L1-RSRP).

The DL RS ID may be an SSB resource indicator (SSBRI) or a CSI-RS resource indicator (CRI).

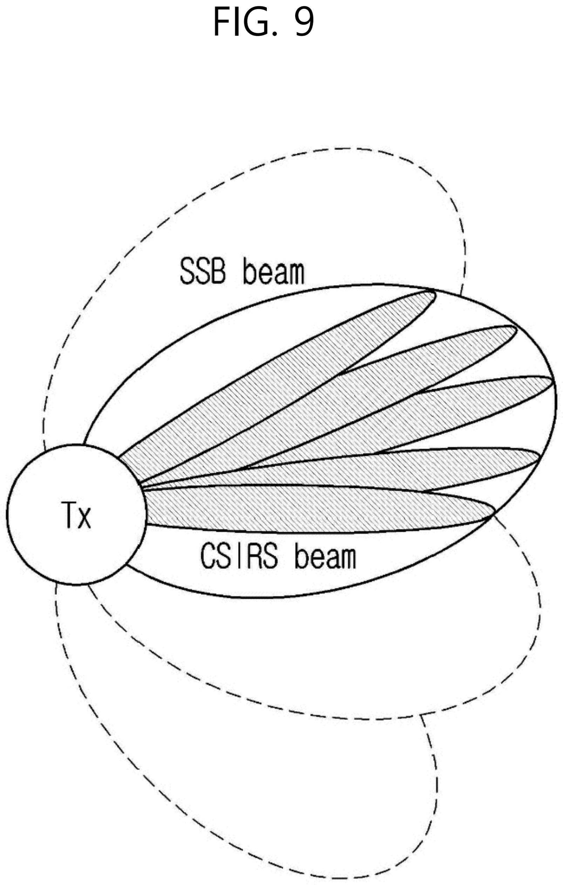

As shown in FIG. 9, an SSB beam and a CSI-RS beam may be used for beam measurement. The measurement metric is L1-RSRP per resource/block. The SSB may be used for coarse beam measurement, and a CSI-RS may be used for fine beam measurement. The SSB may be used for both Tx beam sweeping and Rx beam sweeping.

The Rx beam sweeping using an SSB may be performed across a plurality of SSB bursts while the UE changes an Rx beam for the same SSBRI. Here, one SS burst includes one or more SSBs, and one SS burst set includes one or more SS bursts.

<DL BM using SSB>

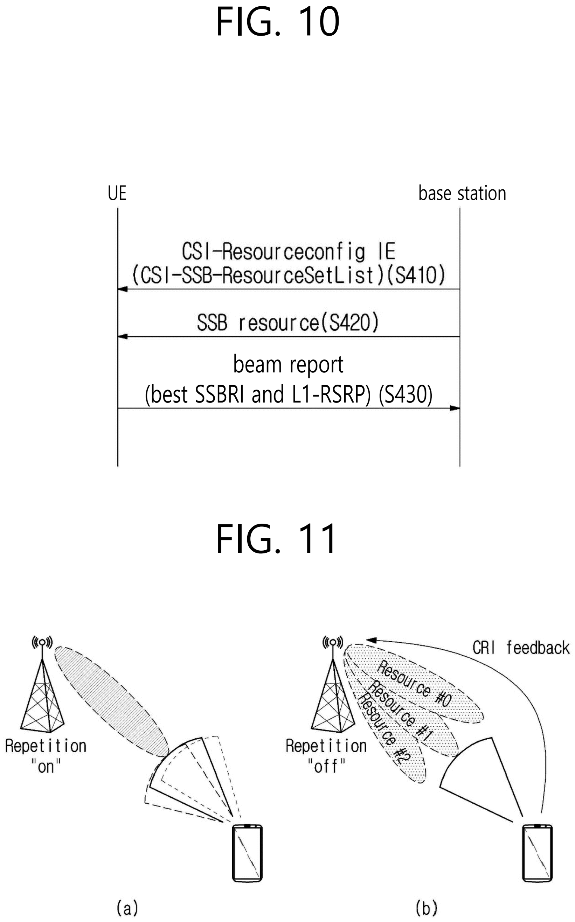

FIG. 10 is a flowchart illustrating an example of the DL BM procedure using SSB.

Configuration of a beam report using an SSB is performed upon

- The UE receives, from the base station, CSI-ResourceConfig IE including CSI-SSB-ResourceSetList which includes SSB resources used for BM (S410).

Table 9 shows an example of CSI-ResourceConfig IE, and like CSI-ResourceConfig IE in Table 9, BM configuration using an SSB is not defined additionally, and the SSB is set as a CSI-RS resource.

[Table 9]

```
-- ASN1START
-- TAG-CSI-RESOURCECONFIG-START
CSI-ResourceConfig ::=                          SEQUENCE {
csi-ResourceConfigId            CSI-ResourceConfigId,
     csi-RS-ResourceSetList            CHOICE {
          nzp-CSI-RS-SSB                      SEQUENCE {
               nzp-CSI-RS-ResourceSetList            SEQUENCE (SIZE (1..maxNrofNZP-CSI-RS-Res
ourceSetsPerConfig))  OF  NZP-CSI-RS-ResourceSetId  OPTIONAL,
               csi-SSB-ResourceSetList            SEQUENCE (SIZE (1..maxNrofCSI-SSB-Resour
ceSetsPerConfig))  OF  CSI-SSB-ResourceSetId      OPTIONAL
               },
          csi-IM-ResourceSetList            SEQUENCE (SIZE (1..maxNrofCSI-IM-ResourceSets
PerConfig))  OF  CSI-IM-ResourceSetId
```

```
     },

     bwp-Id                          BWP-Id,
     resourceType                    ENUMERATED { aperiodic, semiPersistent, periodic },
     ...
}

-- TAG-CSI-RESOURCECONFIGTOADDMOD-STOP
-- ASN1STOP
```

In Table 9, the parameter csi-SSB-ResourceSetList indicates a list of SSB resources used for beam management and reports in a single resource set. Herein, the SSB resource set may be configured as {SSBx1, SSBx2, SSBx3, SSBx4, ...}. An SSB index may be defined from 0 to 63.

- The UE receives the SSB resources from the base station based on the CSI-SSB-ResourceSetList (S420).
- When CSI-RS reportConfig for SSBRI and L1-RSRP reporting is configured, the UE (beam) reports the best SSBRI and L1-RSRP corresponding thereto to the base station (S430).

That is, when reportQuantity in the CSI-RS reportConfig IE is configured as ssb-Index-RSRP, the UE reports the best SSBRI and L1-RSRP corresponding thereto to the base station.

Then, when a CSI-RS resource is configured in an OFDM symbol(s) identical to an SSB (SS/PBCH Block) and QCL-TypeD is applicable, the UE may assume that the CSI-RS and the SSB are quasi co-located with each other in terms of "QCL-TypeD".

Herein, the QCL Type D may mean that antenna ports are QCL with each other in terms of the spatial Rx parameter. When the UE receives a plurality of DL antenna ports which are in a QCL Type D relationship with each other, it is possible to apply the same Rx beam. In addition, the UE does not expect that a CSI-RS is configured in an RE overlapping with a RE of the SSB.

<DL BM using CSI-RS>

Regarding the use of a CSI-RS, i) when a repetition parameter is configured for a specific CSI-RS resource set and TRS_info is not configured, the CSI-RS is used for beam management. ii) when the repetition parameter is not configured and TRS_info is configured, the CSI-RS is used for a tracking reference signal (TRS). iii) when the repetition parameter is not configured and TRS_info is not configured, the CSI-RS is used for CSI acquisition.

This repetition parameter may be set only for CSI-RS resource sets that are associated with CSI-ReportConfig having a report of L1 RSRP or 'No Report or None'.

If the UE receives CSI-ReportConfig in which reportQuantity is set to 'cri-RSRP' or 'none' and, CSI-Resource-Config for channel measurement (higher layer parameter 'resourcesForChannelMeasurement') does not include higher layer parameter 'trs-Info' but includes NZP-CSI-RS-ResourceSet which is set to higher layer parameter 'repetition' (repetition=ON), the UE may be composed of a port of the same number (1-port or 2-port), which includes higher layer parameter 'nrofPorts' for all CSI-RS resources in the NZP-CSI-RS-ResourceSet.

When (higher layer parameter) repetition is set to "ON," it is related to an Rx beam sweeping procedure of a UE. In this case, when the UE is configured with an NZP-CSI-RS-ResourceSet, the UE may assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through the same Tx beam. Here, at least one CSI-RS resource in the NZP-CSI-RS-ResourceSet may be transmitted in different OFDM symbols. In addition, the UE is not expected to receive different periodicities in periodicityAndOffset among all CSI-RS resources in the NZP-CSI-RS-ResourceSet.

In contrast, when repetition is set to "OFF," it is related to a Tx beam sweeping procedure of a base station. In this case, when repetition is set to "OFF," the UE does not assume that at least one CSI-RS resource in the NZP-CSI-RS-ResourceSet is transmitted through the same downlink spatial domain transmission filter. That is, at least one CSI-RS resource in the NZP-CSI-RS-ResourceSet is transmitted through different Tx beams.

FIG. 11 is a diagram illustrating an example of a DL BM procedure using a CSI-RS. FIG. 11(a) shows an Rx beam determination (or refinement) procedure of a UE, and FIG. 11(b) shows a Tx beam determination procedure of a base station. In addition, FIG. 11(a) shows the case where the parameter repetition is set to "ON", and FIG. 11(b) shows the case where the parameter "repetition" is set as "OFF".

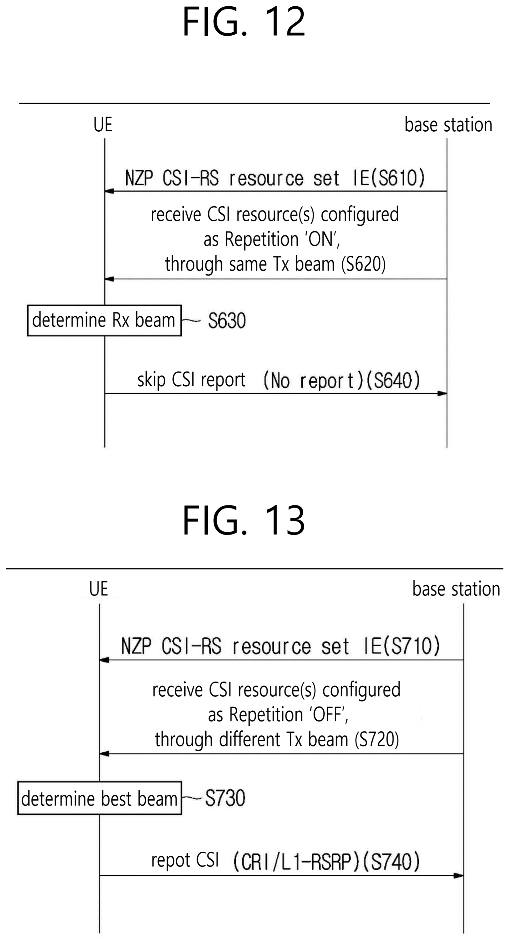

With reference to FIG. 11(a) and FIG. 12, the Rx beam determination procedure of the UE will be described.

FIG. 12 is a flowchart illustrating an example of the Rx beam determination procedure of the UE.

- The UE receives, from the base station, NZP CSI-RS resource set IE including higher layer parameter repetition through RRC signaling (S610). The parameter repetition is set to "ON".
- The UE repeatedly receives a resource(s) in a CSI-RS resource set, in which repetition is set to "ON", from a different OFDM symbol through the same Tx beam (or a DL spatial domain transmission filter) (S620).
- In doing so, the UE determines its own Rx beam (S630).
- The UE may omit a CSI report or may transmit a CSI report including CRI/L1-RSRP to the base station (S640).

That is, when the repetition is set to "ON", the UE may omit a CSI report or may report ID information (CRI) of a beam pair-related preferred beam and a quality value thereof (L1-RSRP).

With reference to FIG. 11(b) and FIG. 13, the Tx beam determination procedure of the base station will be described.

FIG. 13 is a flowchart illustrating an example of the Tx beam determination procedure of the base station.

- the UE receives, from the base station, NZP CSI-RS resource set IE including higher layer parameter repetition through RRC signaling (S710). Here, the repetition parameter is set to "OFF" and relates to a Tx beam sweeping procedure of the base station.
- the UE receives resources in a CSI-RS resource set, in which repetition is set to "OFF", via a different Tx beam (a DL spatial domain transmission filter) (S720).
- the UE selects (or determines) the best beam (S730), and
- the UE reports ID and quality information (e.g., L1-RSRP) of the selected beam to the base station (S740). In this case, reportQuantity of CSI report Config may be configured as "CRI+L1-RSRP".

That is, when the CSI-RS is transmitted for BM, the UE reports CSI and L1-RSRP corresponding thereto to the base station.

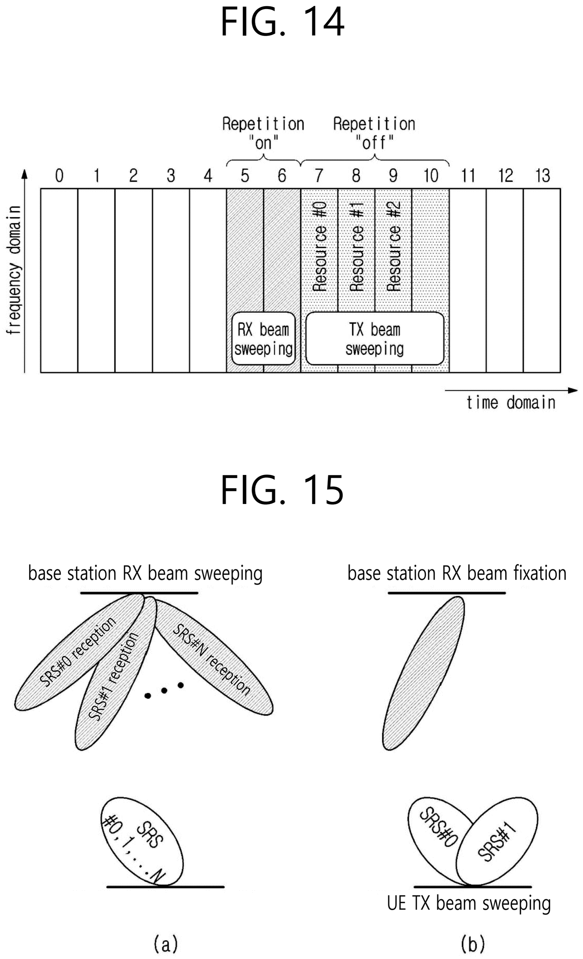

FIG. 14 is a diagram illustrating an example of resource allocation in time and frequency domains, which is related to operation of FIG. 11.

That is, when repetition is set to "ON" for a CSI-RS resource set, a plurality of CSI-RS resources is repeatedly used via the same Tx beam, and, when repetition is set to "OFF" for the CSI-RS resource set, different CSI-RS resources are transmitted via different Tx beams.

<DL BM-Related Beam Indication>

A UE may receive RRC configuration of a list of a maximum M number of candidate Transmission Configuration Indication (TCI) states at least for the purpose of Quasi Co-location (CQL) indication. Herein, M may be 64.

Each TCI state may be configured as one RS set. ID of each DL RS for a spatial QCL at least in an RS set (QCL Type D) may refer to at least one of DL RS types such as an SSB, a P-CSI RS, a SP-CSI RS, or a A-CSI RS.

Initialization/update of ID of DL RS(s) in an RS set used at least for a spatial QCL purpose may be performed at least via explicit signaling.

Table 10 shows an example of TCI-State IE. The TCI-State IE is associated with a quasi co-location (QCL) type corresponding to one or two DL reference signals (RSs).

[Table 10]

```
-- ASN1START
-- TAG-TCI-STATE-START

TCI-State  ::=                    SEQUENCE {
        tci-StateId                    TCI-StateId,
        qcl-Type1                      QCL-Info,
        qcl-Type2                      QCL-Info
                         OPTIONAL,    -- Need  R

        ...
}

QCL-Info  ::=                     SEQUENCE {
        cell                               ServCellIndex
                         OPTIONAL,    -- Need  R
        bwp-Id                             BWP-Id
                         OPTIONAL, -- Cond  CSI-RS-Indicated
        referenceSignal                    CHOICE {
            csi-rs                             NZP-CSI-RS-ResourceId,
            ssb                                SSB-Index
        },
        qcl-Type                       ENUMERATED {typeA, typeB, typeC, typeD},

        ...
}

-- TAG-TCI-STATE-STOP
-- ASN1STOP
```

In Table 10, the parameter "bwp-id" indicates a BL BWP where a RS is located, and the parameter "cell" indicates a carrier where an RS is located, and the parameter "reference signal" indicates a reference antenna port(s) which is a quasi colocation source for a corresponding target antenna port(s). The target antenna port(s) may be an example of a CSI-RS, a PDCCH DMRS, or a PDSCH DMRS. For example, in order to indicate QCL reference information for a NZP CSI-RS, TCI state ID may be indicated in each CORESET configuration. In another example, in order to indicate QCL reference information for a PDSCH DMRS antenna port(s), DCI state ID may be indicated via DCI.

<QCL (Quasi-Co Location)>

An antenna port is defined such that a channel over which a symbol on one antenna port is carried can be inferred from another channel over which a symbol on another antenna port is carried. When properties of the channel over which a symbol on one antenna port is carried can be inferred from a channel over which a symbol on another antenna port is carried, the two antenna ports may be in a quasi co-located or quasi co-location (QC/QCL) relationship.

Herein, the channel properties may include at least one of delay spread, Doppler spread, Doppler shift, average gain, and average delay. Herein, the spatial Rx parameter indicates a spatial (reception) channel property parameter such as an angle of arrival.

In order to decode a PDSCH according to a PDCCH which is detected and has DCI intended for a corresponding UE and a given serving cell, a list of M number of TCI-state configurations in higher layer parameter PDSCH-Config may be set. The number M depends on UE capability.

Each TCI-State includes a parameter for setting a quasi co-location relationship between one or two DL reference signals and a DMRS port of the PDSCH.

The quasi co-location relationship may be configured as higher layer parameter qcl-Type 1 for the first DL RS and qcl-Type 2 (when set) for the second DL RS. If there are the two DL RSs, a QCL type is not the same, regardless of whether the two DL RSs have the same reference or different references.

A quasi co-location type corresponding to each DL RS is given by higher layer parameter "qcl-Type" in QCL-Info, and may take one of the following forms.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, in the case where a target antenna port is a specific NZP CSI-RS, corresponding NZP CSI-RS antenna ports may be indicated/configured to be QCL with a specific TRS in terms of QCL-Type A or with a specific SSB in terms of QCL-Type D. The UE indicated/configured as above may receive a corresponding NZP CSI-RS using a measured Doppler and a delay value, and may apply a Rx beam, which is used in receiving the QCL-TypeD SSB, to receive the corresponding NZP CSI-RS.

The UE receives an activation command used to map eight TCI states to codepoints of a DCI field "Transmission Configuration Indication".

<UL BM>

In the UL BM, beam reciprocity (or beam correspondence) between a Tx beam and an Rx beam may or may not be established according to terminal implementation. If reciprocity between a Tx beam and an Rx beam is established in both a base station and a terminal, a UL beam pair may be aligned through a DL beam pair. However, when reciprocity between a Tx beam and an Rx beam is not established in either of a base station and a terminal, a UL beam pair determination process is required separately from a DL beam pair determination.

In addition, even when both the base station and the UE maintain beam correspondence, the base station may use a UL BM procedure for DL Tx beam determination without the UE requesting reporting of a preferred beam.

UL BM may be performed through beamformed UL SRS transmission, and whether UL BM of an SRS resource set is applied is configured by (higher layer parameter) usage. When usage is configured to 'BeamManagement (BM)', only one SRS resource may be transmitted in each of a plurality of SRS resource sets at a given time instant.

A terminal may be configured with one or more Sounding Reference Symbol (SRS) resource sets configured by the (higher layer parameter) SRS-ResourceSet (through higher layer signaling, RRC signaling, etc.). For each SRS resource set, a UE may be configured with K≥1 SRS resources (higher layer parameter SRS-resource). Here, K is a natural number, and a maximum value of K is indicated by SRS_capability.

Like DL BM, a UL BM procedure may also be divided into Tx beam sweeping of a terminal and Rx beam sweeping of a base station.

FIG. 15 is a diagram illustrating an example of the UL BM procedure using an SRS. FIG. 15(a) shows an RX beam determination procedure by a base station, and FIG. 15(b) shows a Tx beam determination procedure by a UE.

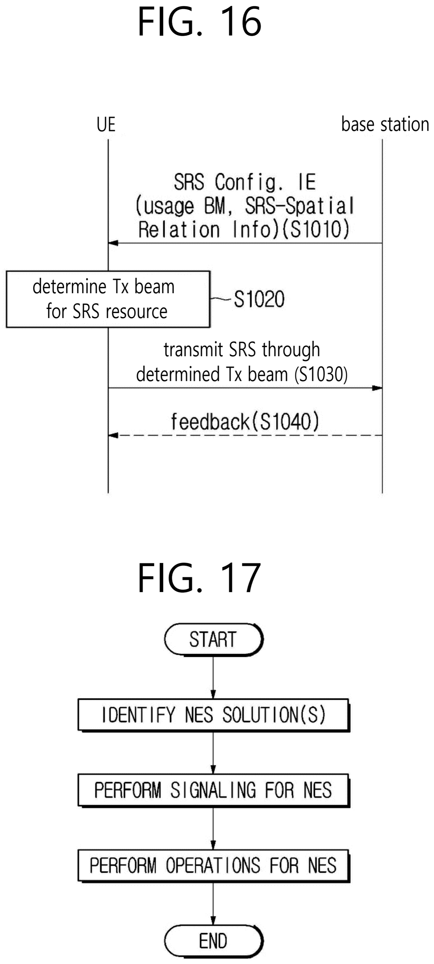

FIG. 16 is a flowchart illustrating a UL BM procedure using an SRS.

- A terminal receives RRC signaling (e.g., SRS-Config 1E) including a usage parameter (higher layer parameter) configured with 'beam management' from a base station (S1010).

Table 11 shows an example of an SRS-Config IE (Information Element), and the SRS-Config IE is used for SRS transmission configuration. The SRS-Config IE includes a list of SRS-Resources and a list of SRS-ResourceSets. Each SRS resource set means a set of SRS-resources.

A network may trigger transmission of an SRS resource set using configured aperiodicSRS-ResourceTrigger (L1 DCI).

[Table 11]

```
-- ASN1START
-- TAG-MAC-CELL-GROUP-CONFIG-START


SRS-Config ::=                          SEQUENCE {
        srs-ResourceSetToReleaseList            SEQUENCE (SIZE(1..maxNrofSRS-ResourceSets)) OF SR
S-ResourceSetId             OPTIONAL,    -- Need N
        srs-ResourceSetToAddModList             SEQUENCE (SIZE(1..maxNrofSRS-ResourceSets)) O
F  SRS-ResourceSet          OPTIONAL,    -- Need N


        srs-ResourceToReleaseList               SEQUENCE (SIZE(1..maxNrofSRS-Resources)) OF S
RS-ResourceId               OPTIONAL,    -- Need N
        srs-ResourceToAddModList                SEQUENCE (SIZE(1..maxNrofSRS-Resources)) OF S
RS-Resource                 OPTIONAL,    -- Need N


        tpc-Accumulation                        ENUMERATED {disabled}
                                        OPTIONAL,    -- Need S

        ...
}


SRS-ResourceSet ::=                     SEQUENCE {
        srs-ResourceSetId                       SRS-ResourceSetId,
```

```
            srs-ResourceIdList                          SEQUENCE (SIZE(1..maxNrofSRS-ResourcesPerSet))
OF  SRS-ResourceId           OPTIONAL,   -- Cond Setup


            resourceType                        CHOICE {
                aperiodic                           SEQUENCE {
                    aperiodicSRS-ResourceTrigger        INTEGER (1..maxNrofSRS-TriggerStates-1),
                    csi-RS                                  NZP-CSI-RS-ResourceId
                                    OPTIONAL,    -- Cond NonCodebook
                    slotOffset                              INTEGER (1..32)
                                    OPTIONAL,    -- Need S
                    ...
                },
                semi-persistent                     SEQUENCE {
                    associatedCSI-RS                        NZP-CSI-RS-ResourceId
                                OPTIONAL, -- Cond NonCodebook

                    ...
                },
                periodic                            SEQUENCE {
                    associatedCSI-RS                        NZP-CSI-RS-ResourceId
                                OPTIONAL, -- Cond NonCodebook

                    ...
                }
            },
            usage                                   ENUMERATED {beamManagement, codebook,
nonCodebook, antennaSwitching},
            alpha                               Alpha
                                                OPTIONAL, -- Need S
            p0                                  INTEGER (-202..24)
                                                OPTIONAL, -- Cond Setup
            pathlossReferenceRS                 CHOICE {
                ssb-Index                           SSB-Index,
                csi-RS-Index                        NZP-CSI-RS-ResourceId



SRS-SpatialRelationInfo ::=       SEQUENCE {
    servingCellId                   ServCellIndex
    OPTIONAL,    -- Need S
    referenceSignal                 CHOICE {
        ssb-Index                           SSB-Index,
```

```
            csi-RS-Index                    NZP-CSI-RS-ResourceId,
        srs                                 SEQUENCE {
            resourceId                      SRS-ResourceId,
            uplinkBWP                       BWP-Id
        }
    }
}



SRS-ResourceId ::=                          INTEGER (0..maxNrofSRS-Resources-1)
```

In Table 11, usage represents a higher layer parameter indicating whether an SRS resource set is used for beam management, codebook-based or non-codebook-based transmission. The usage parameter corresponds to an L1 parameter 'SRS-SetUse'. 'spatialRelationInfo' is a parameter indicating a configuration of a spatial relation between a reference RS and a target SRS. Here, a reference RS may be an SSB, a CSI-RS, or an SRS corresponding to the L1 parameter 'SRS-SpatialRelationInfo'. The usage configured for each SRS resource set.

- the terminal determines a Tx beam for an SRS resource to be transmitted based on the SRS-SpatialRelation Info included in the SRS-Config IE (S1020). Here, SRS-SpatialRelation Info is configured for each SRS resource, and indicates whether to apply the same beam as a beam used in an SSB, a CSI-RS, or an SRS for each SRS resource. In addition, SRS-SpatialRelationInfo may or may not be configured in each SRS resource.
- If the SRS-SpatialRelationInfo is configured in an SRS resource, the same beam as a beam used in an SSB, a CSI-RS or an SRS is applied and transmitted. However, if the SRS-SpatialRelationInfo is not configured in an SRS resource, the terminal arbitrarily determines a Tx beam and transmits an SRS through the determined Tx beam (S1030).

More specifically, for P-SRS in which 'SRS-ResourceConfigType' is configured to 'periodic':

i) When SRS-SpatialRelationInfo is configured with 'SSB/PBCH', a UE transmits a corresponding SRS resource by applying the same spatial domain transmission filter (or generated from a corresponding filter) as a spatial domain reception (Rx) filter used for reception of an SSB/PBCH; or
ii) When SRS-SpatialRelationInfo is configured with 'CSI-RS', a UE transmits an SRS resource by applying the same spatial domain transmission filter used for reception of a periodic CSI-RS or an SP (semi-persistent) CSI-RS; or
iii) When SRS-SpatialRelationInfo is configured with 'SRS', a UE transmits a corresponding SRS resource by applying the same spatial domain transmission filter used for transmission of a periodic SRS.

Similar to the above, even when 'SRS-ResourceConfigType' is configured with 'SP (semi-persistent)-SRS' or 'AP (aperiodic)-SRS', beam determination and transmission operation may be applied.

- Additionally, a terminal may or may not receive feedback on an SRS from a base station as in the following three cases (S1040).

i) When Spatial Relation Info is configured for all SRS resources in an SRS resource set, a terminal transmits an SRS in a beam indicated by a base station. For example, when Spatial Relation Info all indicate the same an SSB, a CRI, or an SRI, a terminal repeatedly transmits an SRS in the same beam. This case corresponds to FIG. G(a), for the purpose of a base station selecting an Rx beam.
ii) Spatial Relation Info may not be configured for all SRS resources in an SRS resource set. In this case, a terminal may freely transmit while changing an SRS beam. That is, this case corresponds to FIG. G(b), for the purpose of a terminal sweeping a Tx beam.
iii) Spatial Relation Info may be configured only for some SRS resources in an SRS resource set. In this case, for the configured SRS resource, an SRS is transmitted with the indicated beam, and for the SRS resource for which Spatial Relation Info is not configured, a terminal may arbitrarily apply a Tx beam and transmit it.

Network Energy Saving (NES)

Energy saving of a base station is being importantly considered in wireless communication systems, including 3GPP, because it may contribute to building an eco-friendly network by reducing carbon emissions and to reducing the operational expenditure (OPEX) of operators in the telecommunications industry. In particular, due to the introduction of 5G communication, higher transmission rates are required, and therefore, base stations need to be equipped with a greater number of antennas and provide services through wider bandwidths and frequency bands. As a result, according to recent studies, the energy cost of base stations has reached a level of about 20% of the total OPEX. Accordingly, the 5G system has adopted various technologies for reducing energy consumption under the name of network energy savings (NES), and the standardization of related technologies is expected to continue. Specifically, Rel-18, which has been recently conducted, discussed techniques such as the following.

[Table 12]

| | |
|---|---|
| 1. | Specify SSB-less SCell operation for inter-band CA for FR1 and co-located cells, if found feasible by RAN4 study, where a UE measures SSB transmitted on PCell or another SCell for an SCell's time/frequency synchronization (including downlink AGC), and L1/L3 measurements, including potential enhancement on SCell activation procedures if necessary [RAN4, RAN2] |
| 2. | Specify enhancement on cell DTX/DRX mechanism including the alignment of cell DTX/DRX and UE DRX in RRC_CONNECTED mode, and inter-node information exchange on cell DTX/DRX [RAN2, RAN1, RAN3] <br> • Note: No change for SSB transmission due to cell DTX/DRX. <br> • Note: The impact to IDLE/INACTIVE UEs due to the above enhancement should be avoided. |
| 3. | Specify the following techniques in spatial and power domains <br> • Specify necessary enhancements on CSI and beam management related procedures including measurement and report, and signaling to enable efficient adaptation of spatial elements (e.g. antenna ports, active transceiver chains) [RAN1, RAN2] <br> • Specify necessary enhancements on CSI related procedures including measurement and report, and signaling to enable efficient adaptation of power offset values between PDSCH and CSI-RS [RAN1, RAN2] <br> • Note: Above objectives are only for UE specific channels/signals <br> • Note: Legacy UE CSI/CSI-RS capabilities applies when considering total number of CSI reports and requirements |
| 4. | Specify mechanism(s) to prevent legacy UEs camping on cells adopting the Rel-18 NES techniques, if necessary [RAN2] |
| 5. | Specify CHO procedure enhancement(s) in case source/target cell is in NES mode [RAN2] |
| 6. | Specify inter-node beam activation and enhancements on restricting paging in a limited area [RAN3]. |
| 7. | Specify the corresponding RRM/RF core requirements, if necessary, for the above features [RAN4] |

According to the application of the NES technology, a base station may perform operations such as controlling on/off in a time axis for a certain time duration, adjusting transmission/reception resources for UE-common or UE-specific signals/channels, changing an amount of frequency-domain resources, adjusting transmission power, or turning on/off antenna ports, transmission-reception points (TRPs), etc. in a spatial domain.

FIG. 17 illustrates an example of an operation procedure of a base station supporting an NES technology. Referring to FIG. 17, the base station identifies NES solution(s) to be applied. The NES solution(s) may be related to control of signal transmission/reception (e.g., on/off), beam operation, handover procedure, channel measurement and reporting, and the like. Which NES solution(s) to apply may be adaptively selected according to a current situation (e.g., cell load level, characteristics of connected UEs, etc.) or may be predefined. The base station having identified the NES solution(s) performs signaling for NES. The specific signaling procedure may vary depending on the identified NES solution(s). For example, the base station may transmit common information regarding the NES solution(s), may transmit configuration information necessary for NES operation to at least one UE. In addition, the base station may receive capability information related to NES from at least one UE. Thereafter, the base station performs operations for NES. In this case, the base station may perform the operations for NES based on the signaling performed earlier. That is, according to system information, configuration information, and control information transferred through the signaling, the base station may turn on/off transmission/reception of a specific signal, turn on/off elements of a spatial domain, or adjust resources for transmission/reception of a measurement signal.

Through a procedure such as that of FIG. 17, the NES technology may be performed. Examples of NES solutions that may be performed through a procedure such as that of FIG. 17 are as follows.

- Intra-system energy saving solution: the RAN node may request a neighboring RAN node to switch at least one SSB beam into its deactivated cell, or may perform paging to a UE in an inactive state (e.g., a stationary UE) using a limited beam set.
- Inter-system energy saving solution: the NG-RAN node having a capacity booster cell may autonomously switch the cell to an inactive state.
- SSB-less SCell solution: when an SSB or an SSB-based RRM measurement timing configuration (SMTC) configuration for an SCell is not provided, the UE may obtain a timing reference and an AGC source from another serving cell. In FR1 or FR2, the base station may configure intra-band CA or inter-band CA including an SCell without SSB transmission, and in this case, SSB/SIB transmission may be triggered by a wake up signal (WUS) of the UE. Accordingly, since the period of a common channel/signal such as an SSB is increased, the base station may remain in a sleep state for a longer time.
- Cell DTX/DRX solution: To reduce downlink transmission/uplink reception activity time of a base station, a periodic cell DTX/DRX pattern (e.g., active and inactive periods) may be commonly configured for UEs in a cell having such a feature. Here, the cell DTX pattern and the cell DRX pattern may be separately configured and activated, and up to two cell DTX/DRX patterns may be configured per MAC entity. When cell DTX is configured and activated, at least one of monitoring for SPS opportunities or monitoring a PDCCH may be suspended during a cell DTX inactive period. When cell DRX is configured and activated, at least one of transmission on a CG resource or SR transmission may be suspended during a cell DRX inactive period. The cell DTX/DRX may be activated/deactivated through RRC signaling or L1 group common signaling.
- For cell DTX/DRX, parameters such as an active duration and a cycle may be configured. The active duration is a period in which the UE waits to receive a PDCCH or an SPS opportunity and to transmit an SR or a CG, and the cycle specifies periodic repetition of the active duration and an inactive duration. When both cell DTX and cell DRX are configured, parameters such as the active duration and the cycle are common. If the base station recognizes an emergency call or a public safety-related service (e.g., MPS or MCS), the network may release or deactivate the cell DTX/DRX configuration so as not to affect the corresponding service. In addition, at least partial overlap is required between the active duration of connected mode DRX of the UE and the active duration of cell DTX/DRX. For example, the connected mode DRX cycle of the UE may be a multiple of the cell DTX/DRX cycle or vice versa.
- Conditional handover (CHO) solution: the CHO procedure, in which execution of handover is determined by the UE, is used while an NES technology is applied (e.g., when a cell activates or deactivates cell DTX/DRX). In this case, the UE may use an NES-specific CHO event to execute CHO to a candidate cell, and as an additional triggering condition for this, reception of DCI that activates CHO condition(s) set as an NES event indication may be applied.
- Spatial and power domain adaptation solution: to support a gNB in transceiver muting and/or transmission power adaptation, a UE may be configured to report multiple CSI entries in CSI reporting based on a plurality of sub-configurations. Each sub-configuration corresponds to a spatial domain adaptation pattern (e.g., a subset of available spatial elements) and/or a power offset between a data channel (e.g., PDSCH) and CSI-RS. With the application of the spatial and power domain adaptation solution, CSI configuration, measurement, and/or reporting operations may be affected.

CSI Measurement and Reporting

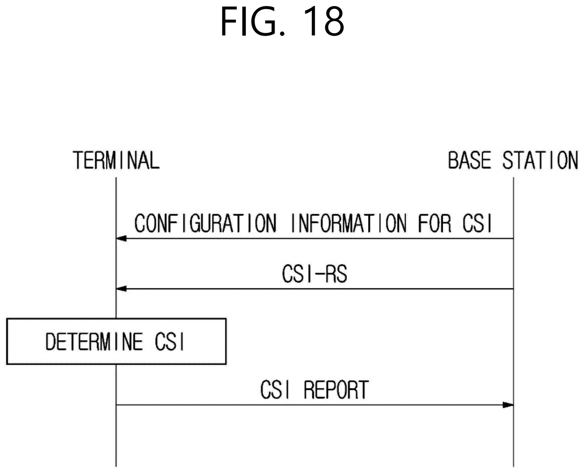

FIG. 18 illustrates an example of a procedure for CSI measurement and reporting.

Referring to FIG. 18, the base station transmits configuration information for CSI to the UE. The configuration information for CSI may include information related to a CSI-RS resource or resource set (e.g., time-frequency resource information, sequence information, power information, etc.), information related to CSI reporting (e.g., quantity information, report type information, report resource information, codebook information, etc.), and information related to CSI measurement. Here, to assist the base station in transceiver muting and/or transmission power adaptation, the UE may be configured to report multiple CSI entries in CSI reporting based on a plurality of sub-configurations. Here, each sub-configuration corresponds to a spatial domain adaptation pattern (e.g., a subset of available spatial elements) and/or a power offset. In addition, with respect to CSI reporting, a higher layer parameter (e.g., CSI-ReportConfig) included in the configuration information may include a list of sub-configurations, each sub-configuration being identified by an identifier (e.g., csi-ReportSubConfigID) and corresponding to a list of at least one CSI-RS resource, or to a CSI-RS antenna port subset, and/or, in addition to a power control offset parameter (e.g., powerControlOffset) for the CSI-RS resource(s), corresponding to a power offset for a PDSCH related to the CSI-RS.

In this case, the configuration related to CSI may include a plurality of sub-configurations. Accordingly, in interpreting the configuration information for CSI, the UE may determine a CSI-RS resource, CSI-RS port mapping, power offset, codebook type, reporting quantity, etc., by considering the sub-configurations. When the UE is configured with configuration information related to CSI reporting (e.g., CSI-ReportConfig) including sub-configurations, the UE is not expected that a higher layer parameter related to the reporting quantity (e.g., reportQuantity) is configured to 'cri-RSRP', 'cri-SINR', 'cri-SINR-Index', 'cri-RSRP-Index', 'none', 'ssb-Index-RSRP', 'ssb-Index-SINR', 'ssb-Index-RSRP-Index', 'ssb-Index-SINR-Index', or 'tdcp'. In addition, when the type of CSI reporting is configured as semi-persistent CSI reporting or aperiodic CSI reporting, the base station may activate/trigger only some of the sub-configurations configured for the UE through a MAC CE or DCI. That is, a trigger state for aperiodic CSI reporting may be configured as needed, and activation of semi-persistent CSI reporting may be controlled by an activation command.

For example, regarding the configuration for a reporting quantity, the UE may determine CSI-RS port index(es) for each CSI-RS resource based on information related to a port subset for each sub-configuration (hereinafter referred to as 'port subset indicator'). The port subset indicator may include a bitmap for specifying a portion of antenna ports for the corresponding CSI-RS resource. Accordingly, the UE may identify at least one antenna port for the corresponding sub-configuration based on positions of bits set to a positive value (e.g., 1) in the port subset indicator.

For example, regarding the configuration for a reporting quantity, the UE may determine a codebook type based on whether sub-configurations are present. Specifically, when sub-configurations are configured for CSI reporting, the UE may exclude the configuration of at least one codebook type. However, depending on the capability of the UE, it may be possible to configure the at least one codebook type.

For example, regarding the configuration for a reporting quantity, a power offset value and an NZP CSI-RS resource set may be configured for each sub-configuration. In this case, depending on whether a power offset value is configured for each sub-configuration and whether an NZP CSI-RS resource set is configured, interpretation of the NZP CSI-RS resource set for each sub-configuration may vary.

In determining a CQI, a higher layer parameter related to a time restriction for channel measurements (e.g., timeRestrictionForChannelMeasurements) may be configured. In this case, the UE should derive a channel estimation for determining CSI based on the most recent CSI reference resource. In this case, when cell DTX for the base station is activated, the cell DTX active time may be considered.

The CSI is derived based on a CSI reference resource. The CSI reference resource is defined, in the frequency domain, as a group of downlink physical resource blocks corresponding to a band related to the CSI derived in the frequency domain, and is defined, in the time domain, as one downlink slot determined based on a higher layer parameter and a subcarrier spacing. The UE should transmit CSI reporting no later than the CSI reference resource after receiving a CSI-RS. In this case, when sub-configurations are configured for CSI reporting, the CSI reference resource is considered for each sub-configuration.

When configured to report at least one of a CQI index, PMI, or RI, in the CSI reference resource, the UE may assume specific values for symbol positions and the number of symbols occupied by control signaling, the number of PDSCH and DMRS symbols, the subcarrier spacing of the BWP, the bandwidth for CQI reporting, the CP length and subcarrier spacing of the reference resource, the redundancy version (RV), etc., for the purpose of deriving at least one of the CQI index, PMI, or RI. In this case, when sub-configurations are configured for CSI reporting, assumptions regarding antenna ports, EPRE, etc., may be determined based on the sub-configurations.

Subsequently, the base station transmits at least one CSI-RS. Accordingly, the UE may receive the at least one CSI-RS and perform measurement. The at least one CSI-RS may be transmitted through a CSI-RS resource or resource set configured by the configuration information.

In this case, in a situation where the UE is configured to monitor power saving related control information (e.g. DCI format 2_6) and the DRX related timer (e.g. drx-onDurationTimer) is not started by a higher layer parameter (e.g. ps-TransmitOtherPeriodicCSI), when the UE is configured to report CSI using a reporting configuration type configured to periodic reporting and a reporting quantity configured to an item other than cri-RSRP and ssb-index-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. As another example, in a situation where the UE is configured to monitor power saving-related control information (e.g., DCI format 2_6) and, according to a higher layer parameter (e.g., ps-TransmitPeriodicL1-RSRP), the drx-onDurationTimer has not been started, when the UE is configured to report L1-RSRP using a reporting configuration type configured to periodic reporting and a reporting quantity configured to cri-RSRP, the most recent CSI measurement opportunity occurs during a time indicated by the drx-onDurationTimer in DRX-related configuration information (e.g., DRX-Config), in addition to a DRX active time or a DRX active time for the CSI to be reported. In other cases, the most recent CSI measurement opportunity occurs within the DRX active time for the CSI to be reported.

Meanwhile, the base station may perform cell DTX/DRX operation. In this case, during a cell DTX inactive period, a UE configured with cell DTX is not expected to receive periodic CSI-RS and semi-persistent CSI-RS configured in a CSI reporting configuration associated with a reporting quantity including at least a rank indicator (RI). When cell DTX is activated for a serving cell, the most recent CSI measurement opportunity for a semi-persistent CSI-RS resource or a periodic CSI-RS resource occurs within cell DTX active periods for CSI reporting, which are configured by configuration information (e.g., CSI-ReportConfig) related to CSI reporting related to a reporting quantity including at least the RI.

The UE that has received at least one CSI-RS determines CSI. In other words, the UE performs CSI calculation. In this case, the UE may perform CSI calculation based on CSI processing criteria. The UE may indicate the number of supported simultaneous CSI calculations, that is, the number NCPU of CSI processing units (CPUs) that can be operated simultaneously. The UE may determine the number of CPUs for the corresponding CSI reporting based on at least one of the NCPU, the number of CPUs for each CSI reporting, the number of CPUs currently occupied, and the configuration of the reporting quantity. For example, for configuration information (e.g., CSI-ReportConfig) related to CSI reporting including a reporting quantity parameter (e.g., reportQuantity) not set to 'none', the CPU(s) may be occupied for at least one OFDM symbol, where the number of the at least one symbol may be determined based on CSI-RS resources or CSI-IM resources related to sub-configurations.

When configuration information (e.g., CSI-ReportConfig) related to CSI reporting includes a plurality of sub-configurations, the number of CPUs occupied by the CSI reporting is determined based on the number of CSI-RS resources corresponding to the sub-configuration. In this case, the number of CSI-RS resources may be determined based on the number of times referenced in the configuration information (e.g., CSI-ReportConfig) related to the CSI reporting, or based on the number of sub-configurations referring to the corresponding CSI-RS resource.

The UE that has determined CSI transmits CSI reporting to the base station. The UE may transmit CSI for at least one sub-configuration according to a reporting quantity parameter (e.g., reportQuantity) configured in configuration information (e.g., CSI-ReportConfig) related to CSI reporting. For example, the CSI reporting may include at least one of a PMI, CQI, RI, CRI, SSBRI, LI, or RSRP. In this case, the CSI reporting may include Part 1 CSI reporting and Part 2 CSI reporting. In addition, the CSI reporting may be transmitted through at least one of a PUCCH or a PUSCH.

When the UE multiplexes CSI reporting including Part 2 CSI reporting onto a PUCCH resource, the UE determines the PUCCH resource and the number of PRBs for the PUCCH resource, or the number of Part 2 CSI reports, on the assumption that each CSI report or each CSI sub-report included in the CSI reporting indicates rank 1 or a rank combination {1, 1}. When a higher layer parameter related to a CSI reporting mode (e.g., csi-ReportMode) is set to 'Mode2', the UE determines the PUCCH resource and the number of PRBs for the PUCCH resource, or the number of Part 2 CSI reports, on the assumption that each CRI of the CSI reporting is related to a resource pair.

When CSI reporting on a PUSCH includes two parts, the UE may omit a portion of Part 2 CSI. The omission of Part 2 CSI follows a priority order. Except when the corresponding CSI reporting includes at least one CSI sub-report including Part 2 corresponding to a sub-configuration from the list of sub-configurations provided by a higher layer parameter (e.g., csi-ReportSubConfigList) included in information (e.g., CSI-ReportConfig) related to the CSI reporting, when omitting Part 2 CSI information for a specific priority level, the UE should omit all information at that priority level.

For a reporting configuration related to information (e.g., CSI-ReportConfig) related to CSI reporting including a list of sub-configurations, the following processing may be possible. For a corresponding CSI reporting including at least one CSI sub-report, omission of Part 2 CSI is performed at a sub-configuration level within the same priority level. Here, a sub-configuration having a lower index value has a higher priority.

When a CSI reporting consists of two parts, the UE may omit a portion of Part 2 CSI. The omission of Part 2 CSI follows a priority order. For a reporting configuration related to information (e.g., CSI-ReportConfig) related to CSI reporting including a list of sub-configurations, for a given CSI reporting including at least one CSI sub-report, omission of Part 2 CSI is defined in section 5.2.3. Part 2 CSI is omitted starting from the lowest priority level up to a Part 2 CSI code rate less than or equal to a code rate configured by a higher layer parameter (e.g., maxCodeRate).

In addition, when a CQI request field in a DCI triggers CSI reporting(s) on a PUSCH, the first uplink symbol carrying the CSI reporting(s) shall not precede a symbol specified as a certain interval after the last symbol of the PDCCH carrying the corresponding DCI. This may be understood as ensuring CSI calculation time. In this case, when a plurality of sub-configurations are configured for CSI reporting, the start position of the certain interval described above may be determined based on all triggered sub-configurations.

Specific embodiments of the present disclosure

The present disclosure relates to a technology for reporting CSI based on sub-configurations of CSI reporting in a wireless communication system. In particular, the present disclosure relates to a technology for transmitting CSIs, that is, CSI sub-reportings, for a plurality of sub-configurations considering overhead, and intends to propose various embodiments for transmitting CSIs for the sub-configurations.

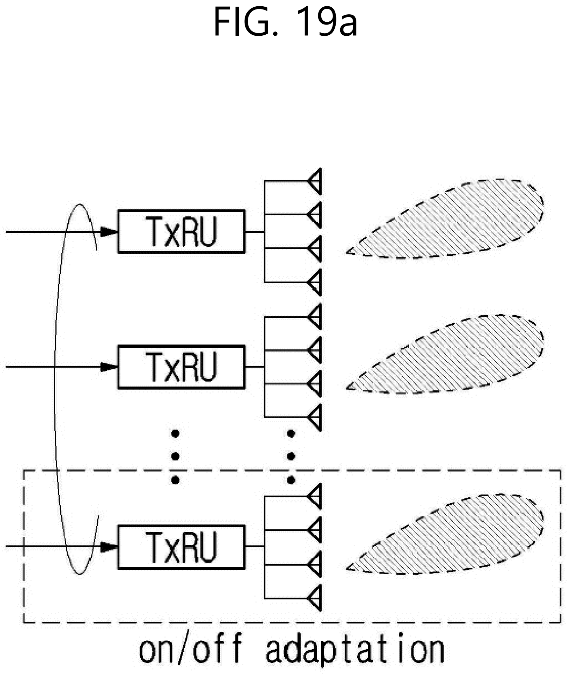

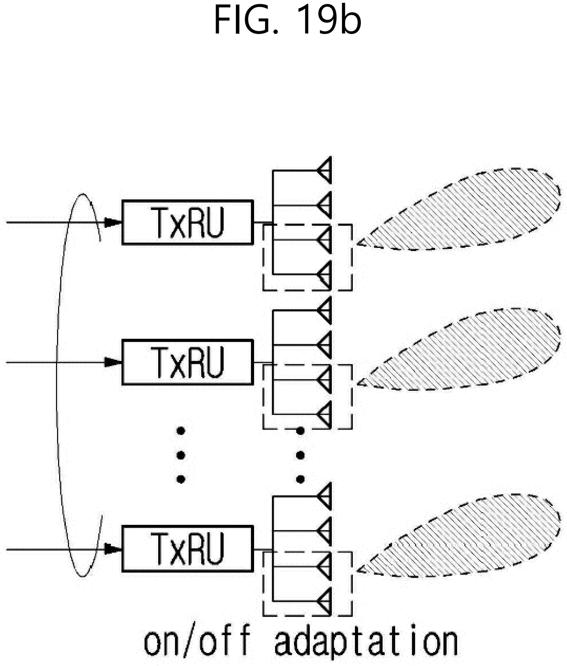

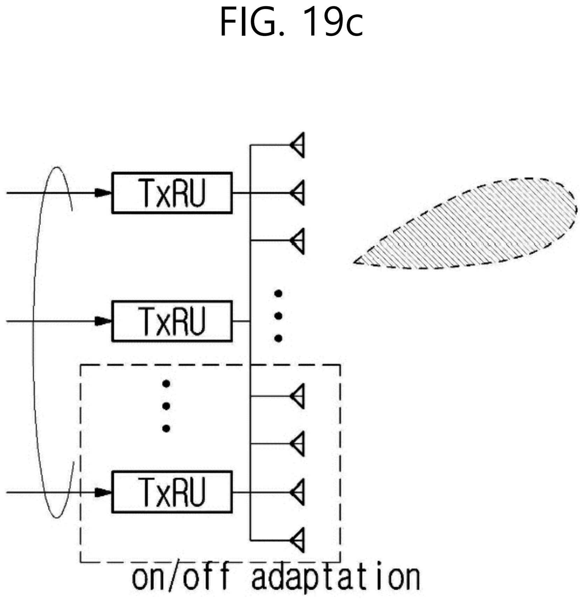

The base station may operate technologies for NES purposes such as controlling the on/off of the UE over a certain duration on a time axis, controlling transmission/reception resources for UE-common or UE-specific signals/channels, changing the amount of resources in a frequency axis, controlling transmission power, or turning on/off antenna ports, TRPs, etc. in a spatial domain. In the present disclosure, the listed technologies are referred to as 'NES technology' or 'NES_tech', and a state in which at least one of the NES_techs is applied is referred to as 'NES mode' or 'NES state'. For example, examples of state control of antenna elements according to the NES mode are as shown in FIG. 19a to FIG. 19c. Referring to FIG. 19a to FIG. 19c, it is possible to save energy by adaptively turning on/off some antenna elements among a plurality of antenna elements connected to a plurality of transmit radio units (TxRUs). The base station may inform the UE which NES_tech(s) are applied for each NES_tech or NES_tech group [Approach 1], or may pre-configure the NES_tech or NES_tech group(s) corresponding to each code-point of a specific indicator [Approach 2]. Here, the specific indicator may be indicated through DCI or MAC CE, or may be configured through higher layer signaling.

In the case of Approach 1, when at least one NES_tech is applied to the UE, the state may be defined as an NES mode or NES state, and furthermore, may be treated as a different NES mode or a different NES state depending on which NES_tech is applied. The NES mode or NES state may be used as a concept indicating whether at least one NES technology is applied, or, in addition thereto, further indicating which NES technology(ies) is applied. When the NES mode or NES state further indicates which NES technology(ies) is applied, different NES modes or different NES states may include different combinations of NES_techs. In the case of Approach 2, for example, when a 1-bit indicator is used, '0' may indicate that the corresponding NES_tech is not applied, and '1' may indicate that at least one NES_tech is applied. In this case, when '1' is indicated through the corresponding indicator, the state may be defined as an NES mode or NES state. In another example, when a 2-bit indicator is used, '00' may indicate that there is no corresponding NES_tech, '01' may indicate that at least one NES_tech_A is applied, '10' may indicate that at least one NES_tech_B is applied, and '11' may indicate that at least one NES_tech_C is applied. In this case, when a code-point other than '00' is indicated through the corresponding indicator, the state may be defined as an NES mode or NES state. Furthermore, the UE may determine NES state #1 when '01' is detected, NES state #2 when '10' is detected, and NES state #3 when '11' is detected. Accordingly, whether the state is an NES state and/or which NES state it is may be distinguished for each code-point.

For NES purposes, the base station may turn on/off certain spatial elements (e.g., antenna ports, active transmit/receive chains, panels, or TRPs) or adjust power values for downlink signals/channels. To dynamically apply various NES technologies in the spatial domain and power domain, the base station may associate, for one CSI report configuration (e.g., CSI-ReportConfig), CSI-RS resources or resource sets having different antenna ports, or may associate a plurality of power offsets (e.g., a powerControlOffset parameter representing a power offset value between PDSCH and CSI-RS, a powerControlOffsetSS parameter representing a power offset value between SSS and CSI-RS, etc.).

Meanwhile, at least one of the following CSI frameworks may be introduced.

- Framework#1: A plurality of CSI-RS resource sets are associated with one channel measurement resource (CMR) or one interference measurement resource (IMR) in CSI-ReportConfig. Here, the CMR may be configured by a resourcesForChannelMeasurement parameter, and the IMR may be configured by a csi-IM-ResourcesForInterference parameter or an nzp-CSI-RS-ResourcesForInterference parameter. For example, for the CMR, CSI-RS resource set #1 and CSI-RS resource set #2 are associated, CSI-RS resources belonging to CSI-RS resource set #1 may be configured with 16 antenna ports (APs), and CSI-RS resources belonging to CSI-RS resource set #2 may be configured with 8 APs.

- Framework#2: When one CSI-RS resource set associated with one CMR or one IMR is configured in CSI-ReportConfig, at least one CSI-RS resource having different properties such as the number of APs and/or power offset may be configured within the CSI-RS resource set. For example, for CSI-RS resource set #1 configured as a CMR, CSI-RS resource #1 belonging to CSI-RS resource set #1 is configured with 16 APs, and CSI-RS resource #2 belonging to the same set may be configured with 8 APs. For example, for CSI-RS resource set #1 configured as a CMR, CSI-RS resource #1 belonging to CSI-RS resource set #1 is configured with power offset #1, and CSI-RS resource #2 belonging to the same set may be configured with power offset #2.

- Framework#3: When one CSI-RS resource set associated with one CMR or one IMR is configured in CSI-ReportConfig, some or all CSI-RS resources in the set may be configured with a plurality of numbers of APs and/or power offset values. For example, for CSI-RS resource set #1 configured as a CMR, CSI-RS resource #1 belonging to CSI-RS resource set #1 is configured with up to 16 APs, and CSI reporting using at least one AP among them may be configured. Alternatively, CSI-RS resource #2 belonging to the same CSI-RS resource set #1 is configured with a plurality of power offset values, and CSI reporting using all or part of the power offsets may be configured.

For the CSI frameworks described above, a CSI reporting method may be defined through at least one of the following options.

- Option #1: CSIs considering a plurality of numbers of APs values and/or a plurality of power offset values configured in one CSI reporting may all be included in one CSI reporting. Alternatively, CSIs considering a plurality of numbers of APs values and/or a plurality of power offset values determined through configuration/indication of the base station may be included in one CSI reporting. In this case, the number of APs values and/or power offset values configured/indicated through the base station may be a part of the number of APs values and/or power offset values configured in the CSI reporting.

- Option #2: Even if a plurality of numbers of APs values and/or a plurality of power offset values are configured in one CSI reporting, CSIs considering the number of single AP value and/or a single power offset value through configuration/indication of the base station may be included in one CSI reporting.

- Option #3: Even if a plurality of numbers of APs values and/or a plurality of power offset values are configured in one CSI reporting, CSIs considering a part of the number of APs values and/or a part of power offset values through judgment/decision/selection of the UE based on a criterion pre-configured by the base station or predefined may be included in one CSI reporting.

In configuration for CSI reporting (e.g., CSI-ReportConfig), L sub-configurations greater than 1 may be configured, and each sub-configuration may correspond to one of a spatial domain adaptation pattern or a power domain adaptation pattern.

Here, the spatial domain adaptation pattern may correspond to a specific number of APs or an AP on/off pattern, or may correspond to a specific CSI-RS power value (e.g., a CSI-RS power value determined by a powerControlOffsetSS parameter which is a power offset value between SSS and CSI-RS, since turning off a part of antenna elements corresponding to one AP may affect the CSI-RS power value). For example, when applying Framework #2, for CSI-RS index #n1 belonging to a resource set, the number of A1 APs or a P1 power value is configured, and for CSI-RS index #n2 belonging to the same resource set, the number of A2 APs or a P2 power value may be configured. In this case, sub-configuration index #s1 is associated with CSI-RS index #n1, and sub-configuration index #s2 is associated with CSI-RS index #n2, thereby allowing spatial domain adaptation patterns to be configured differently for each sub-configuration. When applying Framework #3, when CSI-RS index #n1 belonging to a resource set is configured with the number of A1 APs (or a P1/P2 power value), sub-configuration index #s1 is associated with the number of A1 APs (or the P1 power value), and sub-configuration index #s2 is associated with the number of A2 APs less than the number of A1 APs (or the P2 power value) configuring CSI-RS index #n1, thereby allowing spatial domain adaptation patterns to be configured differently for each sub-configuration.

In addition, the power domain adaptation pattern may mean that a power offset value (e.g., a power offset value determined by a powerControlOffset parameter which is a power offset value between PDSCH and CSI-RS, or a powerControlOffsetSS parameter which is a power offset value between SSS and CSI-RS) is varied. For example, when applying Framework #2, for CSI-RS index #n1 belonging to a resource set, a P1 power value is configured, and for CSI-RS index #n2 belonging to the same resource set, a P2 power value may be configured. In this case, sub-configuration index #s1 is associated with CSI-RS index #n1, and sub-configuration index #s2 is associated with CSI-RS index #n2, thereby allowing power domain adaptation patterns to be configured differently for each sub-configuration.

In addition, when applying Framework #3, for CSI-RS index #n1 belonging to a resource set, a P1 power value and a P2 power value may be configured. In this case, sub-configuration index #s1 is associated with the P1 power value, and sub-configuration index #s2 is associated with the P2 power value, thereby allowing power domain adaptation patterns to be configured differently for each sub-configuration.

By using one of the options #1/2/3 described above, the UE may feedback to the base station a CSI reporting including CSI(s) corresponding to N sub-configurations, where N is between 1 and L among the L sub-configurations.

As described above with Option #1 and Option #3, one CSI report may include CSI(s) corresponding to a plurality of numbers of APs values and/or a plurality of power offset values by the UE. This is for maintaining an efficient communication state with UEs after NES operation of the base station, and may be utilized to identify in advance the impact of controlling the number of APs and/or controlling power before performing NES operation. However, as described above, when feeding back CSI per sub-configuration, the amount of CSI information increases compared with the existing CSI report, thereby a payload size may significantly increase. In addition, due to the increased payload size, the amount of uplink resources for CSI reporting increases, so that the amount of resources for data transmission through uplink may decrease. Therefore, the present disclosure proposes a technique for reducing feedback overhead while supporting CSI information feedback corresponding to a plurality of numbers of APs values and/or a plurality of power offset values of the UE for one CSI report. Hereinafter, in the present disclosure, '/' means 'and', 'or', or 'and/or' depending on context.

[Embodiment #1] A scheme of reducing overhead in CSI reporting, in which a UE includes CSI(s) corresponding to a plurality of AP number values and/or a plurality of power offset values for one CSI report, by configuring at least one occasion carrying the CSI(s) and making information included different per occasion

In the present disclosure, situations in which the UE has to carry CSI corresponding to a plurality of numbers of APs values and/or a plurality of power offset values for one CSI report may be as follows. However, embodiments of the present disclosure are not limited only to the situations to be described below. In the following description, 'carrying' may be understood as 'transmitting' CSI(s) through the corresponding occasion or resource, or as 'mapping' a signal representing CSI(s).

As in option #1, when CSIs considering a plurality of numbers of APs values and/or a plurality of power offset values configured for one CSI report are all included in one CSI report, CSIs corresponding to the plurality of numbers of APs values and/or the plurality of power offset values may be transmitted through one CSI report. Alternatively, as in option #1, when CSIs considering a plurality of numbers of APs values and/or a plurality of power offset values are included in one CSI report through configuration/indication of a base station, CSIs corresponding to the plurality of numbers of APs values and/or the plurality of power offset values may be transmitted through one CSI report. In other words, a plurality of CSIs corresponding to a plurality of sub-configurations, that is, CSI sub-reports, may be transmitted.

In this case, the number of APs values and/or power offset values configured/indicated through the base station may be a part of the AP number values and/or the power offset values configured for the CSI report. Alternatively, as in option #3, even when a plurality of numbers of APs values and/or a plurality of power offset values are configured for one CSI report, when CSIs considering some number of APs values and/or some power offset values selected/determined/judged by the UE based on a pre-configured or predefined criterion of the base station are included in one CSI report, CSIs corresponding to the plurality of numbers of APs values and/or the plurality of power offset values may be transmitted through one CSI report. Alternatively, according to a combination of option #1 and option #3, when CSIs considering a plurality of numbers of APs values and/or a plurality of power offset values (e.g., a part of the number of APs values and/or the power offset values configured for the CSI report) are included in one CSI report through configuration/indication of the base station, and when CSIs considering some number of APs values and/or some power offset values selected/determined/judged by the UE based on a pre-configured or predefined criterion of the base station among the CSIs are included in one CSI report, CSIs corresponding to the plurality of numbers of APs values and/or the plurality of power offset values may be transmitted through one CSI report.

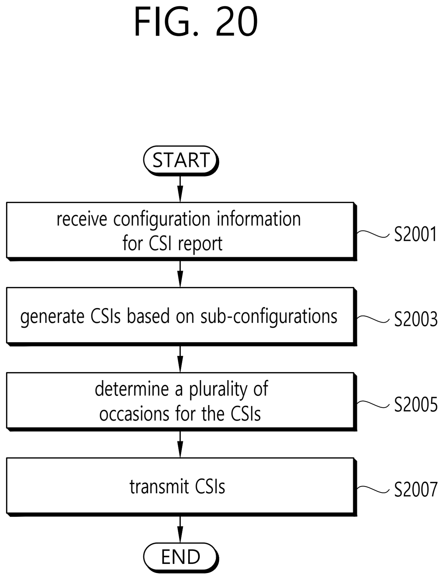

FIG. 20 illustrates an example of a procedure for reporting CSIs for sub-configurations in a plurality of occasions according to an embodiment of the present disclosure. FIG. 20 exemplifies a method performed by a UE.

Referring to FIG. 20, in step S2001, the UE receives configuration information for CSI reporting. The configuration information may include information related to CSI-RS resources or resource sets, the number of APs, and power offset related to CSI reporting. In addition, the configuration information may include a plurality of sub-configurations, and the sub-configurations may be related to different number of APs subsets or power offset values. Here, the configuration information may include a list of the plurality of sub-configurations, where the number of APs subset may be expressed in the form of a bitmap, and the power offset values may be expressed in the form of a sum of a base value and a difference value.

In step S2003, the UE generates a plurality of CSIs based on the sub-configurations included in the CSI report configuration. That is, the UE may receive at least one CSI-RS through CSI-RS resources related to the configuration information for CSI reporting, and may measure a channel or interference using the received at least one CSI-RS. Then, the UE may generate at least one CSI including at least one item indicated by the configuration information. For example, the UE may generate CSIs per sub-configuration.

In step S2005, the UE determines a plurality of occasions for the CSIs. The UE determines a plurality of occasions for transmitting CSIs for the sub-configurations of one CSI report. According to various embodiments, the UE may determine the plurality of occasions based on the configuration information for CSI reporting. The plurality of occasions may be indicated by the configuration information, or may be derived from resources indicated by the configuration information. For this purpose, the UE may check or obtain additional information necessary for determining the plurality of occasions.

In step S2007, the UE transmits CSIs. In other words, the UE transmits CSIs through the plurality of occasions. In this case, the information transmitted in each occasion may be a CSI corresponding to any one sub-configuration or may be a part of the CSIs. That is, each occasion may correspond to one sub-configuration, or each occasion may correspond to a part of a combination of CSIs (e.g., a common part of the CSIs).

As in the embodiment described with reference to FIG. 20, a plurality of CSIs may be transmitted through a plurality of occasions. Hereinafter, the present disclosure describes embodiments of configuring/indicating a plurality of occasions carrying CSI(s) corresponding to one CSI report.

[Embodiment #1-1-1] For periodic/semi-persistent (P/SP) CSI reporting, a reporting period and a slot index in which reporting is performed per period may be configured/indicated by using at least one parameter of related configuration information (e.g., reportSlotConfig and/or reportSlotOffsetList). Specifically, in the case of periodic (P)-CSI reporting and semi-persistent (SP)-CSI reporting on PUCCH, the period and the offset may be configured by the reportSlotConfig parameter. In the case of SP-CSI reporting on PUCCH, the period is configured by the reportSlotConfig parameter, and the offset may be determined by indicating one value among a plurality of candidate values configured by the reportSlotOffsetList parameter through DCI activating the corresponding PUSCH. In this case, according to one embodiment, slots belonging to N periods may be defined as a set of a plurality of occasions carrying CSI(s) corresponding to one CSI report. That is, N occasions may be included in one set. For this purpose, an agreement between a base station and a UE on a starting point of the N periods may be defined. For example, a method of grouping N periods into one set based on a specific SFN index (e.g., SFN index 0) may be possible. As another example, a method of grouping N periods into one set based on a specific slot index (e.g., in the case of SP-CSI reporting, a slot in which an activation DCI or MAC-CE is received, or a slot 3msec after the corresponding HARQ-ACK transmission after MAC-CE reception) may be possible. As a result, N periods from a reference time point may be determined as one set, and next N periods may be determined as another set.

According to Embodiment #1-1-1, the UE may receive information related to a reporting period of CSI and a slot index in which reporting is performed per period from the base station, and may determine a plurality of occasions based on the received information. Specifically, the UE may select as many slots (e.g., N slots) as necessary to transmit CSI sub-reports including CSIs for sub-configurations of one CSI report among periodical slots indicated by the received information, and may transmit CSIs by using the selected slots.

[Embodiment #1-1-2] For P/SP CSI reporting, a plurality of slots per period may be configured as resources capable of carrying CSI. For example, when a reporting period is configured/indicated as P and an offset value is configured/indicated as Y, in addition to the Y-th slot within the period, the (Y+K)-th, (Y+2×K)-th, ..., and (Y+M×K)-th slots may be designated as resources capable of carrying CSI. Here, a K value and an M value may be pre-configured, and for example, the K value may be configured to be the same as the Y value. In this case, N slots configured as resources capable of carrying CSI may be defined as a set of a plurality of occasions carrying CSI(s) corresponding to one CSI report. That is, N occasions may be included in one set. An agreement between a base station and a UE on the starting points of the N slots may be defined. In this case, when M and N are the same, slots capable of carrying CSI within one reporting period may form one set. When M and N are different, or even when M and N are the same, for example, a method of grouping N slots into one set based on a specific SFN index (e.g., SFN index 0) may be possible. As another example, a method of grouping N slots into one set based on a specific slot index (e.g., in the case of SP-CSI reporting, a slot in which an activation DCI or MAC-CE is received, or a slot 3msec after the corresponding HARQ-ACK transmission after MAC-CE reception) may be possible. As a result, N slots from a reference time point may be determined as one set, and next N slots may be determined as another set.

According to Embodiment #1-1-2, the UE may receive information related to a reporting period of CSI and a starting slot position of the period (e.g., offset) from the base station. In addition, the UE may check information related to the number of slots and the interval of slots for CSI reporting within one period. Accordingly, the UE may determine a plurality of occasions based on the received information and the checked information. Specifically, the UE may select as many slots (e.g., N slots) as necessary to transmit CSI sub-reports including CSIs for sub-configurations of one CSI report among the slots for CSI reporting included in at least one period, and may transmit CSIs by using the selected slots.

[Embodiment #1-1-3] For aperiodic (AP) CSI reporting, a plurality of occasions corresponding to one CSI report may be indicated by allocating a plurality of PUSCH resources using an UL grant. For example, in the case of an UL grant not scheduling UL-SCH, an offset K value from a slot n in which the UL grant is transmitted may be indicated through parameters such as reportSlotOffsetListDCI-0-1 or reportSlotOffsetListDCI-0-2. Alternatively, in the case of an UL grant scheduling UL-SCH, a K2 value configured in a TDRA table may be indicated. In this case, CSI reporting information may be carried in a PUSCH within a slot indicated through the offset K value or K2 value. According to this embodiment, N PUSCHs may be allocated at once through the UL grant. For example, N PUSCHs may be scheduled at once at an interval of X slots from a slot indicated by offset K or K2. Here, an X value may be, for example, 1, and may be predefined, configured through higher layer signaling, or indicated through DCI. As another example, a multi-PUSCH scheduling DCI introduced in Rel-16/Rel-17 may be used to allocate N PUSCHs at once.

According to Embodiment #1-1-3, the UE may receive a UL grant including information related to a plurality of slots for CSI reporting from the base station, and may transmit CSIs by using occasions within the slots determined based on the information included in the UL grant. For this purpose, the UE may check information related to a slot interval including the occasions, may select as many slots (e.g., N slots) as necessary to transmit CSIs for sub-configurations of one CSI report according to the slot interval, and may transmit CSIs by using the selected slots.

Next, the present disclosure describes embodiments in which, when CSI(s) corresponding to one CSI report are configured/indicated to be carried in N occasions, CSIs are constructed per occasion. The embodiments described below relate to how CSI sub-reports are mapped to a plurality of occasions.

The N occasions may be configured/indicated by [Embodiment #1-1-1], [Embodiment #1-1-2], or [Embodiment #1-1-3]. Alternatively, whether the N occasions are applied may be indicated through DCI, group-common DCI, or MAC-CE, and the N occasions may be applied only for a certain period of time after being indicated. As described above, when the UE has to carry CSIs corresponding to a plurality of numbers of APs values and/or a plurality of power offset values for one CSI report, each CSI may be indexed. For example, when a CSI for N1, the number of APs, and power offset A1 is indexed as CSI#1, a CSI for N2, the number of APs, and power offset A2 is indexed as CSI#2, and a CSI for N3, the number of APs, and power offset A3 is indexed as CSI#3, the overhead per occasion may be reduced by transmitting CSI#1/2/3 corresponding to a single CSI report differently per occasion. Here, the N1/N2/N3 values may be the same or different, and the A1/A2/A3 values may be the same or different. In the following description, an example in which three CSIs correspond to a single CSI report is presented, but the embodiments described below may also be applied when a different number of CSIs correspond to a single CSI report. For example, each of the three CSIs described below may correspond to a CSI sub-configuration. In these embodiments, a CSI index linked per occasion may be determined by a rule (e.g., in ascending or descending order of the index) or may be pre-configured/predefined.

[Embodiment #1-2-1] An individual CSI may be carried in each occasion. For example, when N is 3, CSI#1 may be carried in the first occasion, CSI#2 may be carried in the second occasion, and CSI#3 may be carried in the third occasion. According to Embodiment #1-2-1, the UE may determine a plurality of occasions, and may transmit CSIs in the determined occasions according to a designated order.

[Embodiment #1-2-2] Common information of a plurality of CSIs may be carried in a specific occasion, and remaining information for each individual CSI may be carried in the remaining occasion(s). Here, the common information may be understood as an item having the same value. That is, according to Embodiment #1-2-2, the UE may determine a plurality of occasions, may transmit a CSI sub-report including information having the same value among CSIs in one occasion, and may transmit CSI sub-reports including the remaining information excluding the information having the same value from each CSI in each occasion according to a designated order.

For example, when N is 4, and CSI is configured as CRI+RI+LI+PMI+CQI, and the common information is RI, RI values for CSI#1/2/3 may be carried in the first occasion, information of CRI+LI+PMI+CQI excluding RI from CSI#1 may be carried in the second occasion, information of CRI+LI+PMI+CQI excluding RI from CSI#2 may be carried in the third occasion, and information of CRI+LI+PMI+CQI excluding RI from CSI#3 may be carried in the fourth occasion. In this case, the position of the occasion carrying the common information may be predefined or may be configured through higher layer signaling. In addition, which item is the common information may be predefined or may be configured through higher layer signaling.

[Embodiment #1-2-3] Baseline information (e.g., average value, minimum value, maximum value, median value) of a plurality of CSIs may be carried in a specific occasion, and differential values from the baseline information for each individual CSI may be carried in the remaining occasion(s). That is, according to Embodiment #1-2-3, the UE may determine a plurality of occasions, may transmit a representative CSI or reference CSI including representative values (e.g., baseline values) of items included in CSIs in one occasion, may express values of items included in each CSI as relative values compared to the representative value, and may transmit CSIs including at least one relative value in each occasion according to a designated order.

For example, when N is 4 and CSI is configured as CRI+RI+LI+PMI+CQI, baseline information for each of CRI/RI/LI/PMI/CQI of CSI#1/2/3 may be carried in the first occasion, differential values from the baseline information for each of CRI/RI/LI/PMI/CQI corresponding to CSI#1 may be carried in the second occasion, differential values from the baseline information for each of CRI/RI/LI/PMI/CQI corresponding to CSI#2 may be carried in the third occasion, and differential values from the baseline information for each of CRI/RI/LI/PMI/CQI corresponding to CSI#3 may be carried in the fourth occasion. Here, the position of the occasion carrying the common information may be predefined or may be configured through higher layer signaling.

Additionally, a combination of [Embodiment #1-2-2] and [Embodiment #1-2-3] may also be possible. For example, among CRI/RI/LI/PMI/CQI, RI may be carried as common information in the first occasion, baseline information for the remaining CRI/LI/PMI/CQI may be carried in the first occasion, and differential values from the baseline information for each of CRI/LI/PMI/CQI corresponding to each individual CSI may be carried in the remaining occasions.

[Embodiment #1-2-4] All CSIs may be included in each occasion, but by prioritizing information corresponding to a specific CSI index, relatively more content for the information corresponding to the specific CSI index may be transmitted, and information corresponding to the remaining CSI indices may be compressed or at least partially omitted. In this case, a higher-priority CSI may be transmitted using relatively more bits, and the remaining CSI(s) may be transmitted using relatively fewer bits. In this case, the specific CSI index may be different for each occasion. That is, according to Embodiment #1-2-4, the UE may determine a plurality of occasions, and may generate CSI sub-reports to be transmitted in each occasion by combining CSIs. In generating each CSI sub-report, a significant CSI is defined, and the significant CSI is represented with relatively more items and/or higher resolution compared to other CSIs. Then, the UE may transmit the generated CSI sub-reports in each occasion according to a designated order.

For example, when N is 3 and CSI is configured as CRI+RI+LI+PMI+CQI, all items of CSI#1 and only CRI+RI of the remaining CSI#2/3 may be carried in the first occasion, all items of CSI#2 and only CRI+RI of the remaining CSI#1/3 may be carried in the second occasion, and all items of CSI#3 and only CRI+RI of the remaining CSI#1/2 may be carried in the third occasion. As another example, when N is 3, in the first occasion, both wideband (WB) information (e.g., PMI and/or CQI) and subband (SB) information (e.g., PMI and/or CQI) of CSI#1 may be carried, and only WB information of the remaining CSI#2/3 may be carried; in the second occasion, both WB information and SB information of CSI#2 may be carried, and only WB information of the remaining CSI#1/3 may be carried; and in the third occasion, both WB information and SB information of CSI#3 may be carried, and only WB information of the remaining CSI#1/2 may be carried. Here, WB information may include WB PMI and/or WB CQI, and SB information may include SB PMI and/or SB CQI.

[Embodiment #1-2-5] Compressed information of a plurality of CSIs may be carried in a specific occasion, and information for each individual CSI may be carried in the remaining occasion(s). For example, when N is 4, information for CSI#1/2/3 may be carried in the first occasion, but compressed information may be carried for each CSI, CSI#1 may be carried in the second occasion, CSI#2 may be carried in the third occasion, and CSI#3 may be carried in the fourth occasion. According to Embodiment #1-2-5, the UE may determine a plurality of occasions, may generate a compressed CSI sub-report by integrating CSIs, and may transfer the compressed CSI sub-report and CSI sub-reports including each CSI in each occasion according to a designated order. In the present disclosure, compressed information may be referred to as abbreviated information, representative information, integrated information, or another term having an equivalent technical meaning.

Here, compression may be performed by configuring CSI only with WB PMI and/or CQI without SB PMI and/or CQI, by varying granularity for a basis in a time domain/frequency domain/spatial domain, by omitting part of the information, or by configuring with a baseline value and differential values. Alternatively, in the case of beam management related reporting such as L1-RSRP or L1-SINR, compression may be performed by reducing the number of CRI/RSRP/-SINR values per CSI index. In this case, the position of the occasion carrying compressed information of a plurality of CSIs may be predefined or may be configured through higher layer signaling.

[Embodiment #1-3] For a CSI report configuration in which at least one sub-configuration is configured, a reporting period per sub-configuration and a slot index in which reporting is performed in each period may be configured/indicated.

In the case of P-CSI reporting and SP-CSI reporting on PUCCH, the period and offset may be configured by a parameter (e.g., reportSlotConfig) of configuration information related to reporting. In this case, the parameter may be configured per sub-configuration. In configuring the parameter per sub-configuration, period/offset values may be independently configured per sub-configuration, or may be configured by using a relative value for a specific sub-configuration. For example, when the period is configured to be the same for the sub-configurations, the reportSlotConfig parameter is configured for sub-configuration #0, and a relative offset (e.g., 2 slots) is configured for sub-configuration #1, the UE may transmit a CSI corresponding to sub-configuration #0 in slot n, and may transmit a CSI corresponding to sub-configuration #1 in slot n+2.

In the case of SP-CSI reporting on PUCCH, the period may be configured by a first parameter (e.g., report-SlotConfig) of configuration information related to reporting, and the offset may be configured by indicating one of a plurality of candidate values configured by a second parameter (e.g., reportSlotOffsetList) of configuration information related to reporting through DCI activating a PUSCH. The reportSlotConfig parameter and/or the reportSlotOffsetList parameter may be individually configured per sub-configuration. In configuring the parameter(s) per sub-configuration, period/offset values may be independently configured per sub-configuration, or may be configured by using a relative value for a specific sub-configuration. For example, when a reportSlotOffsetList#0 parameter is configured for sub-configuration #0 and a reportSlotOffsetList#1 parameter is configured for sub-configuration #1, if a k-th offset value is indicated through an activation DCI, the UE may transmit a CSI corresponding to sub-configuration #0 through a slot corresponding to a k-th element of the reportSlotOffsetList#0, and may transmit a CSI corresponding to sub-configuration #1 through a slot corresponding to a k-th element of the reportSlotOffsetList#1. As another example, when a reportSlotOffsetList parameter is configured for sub-configuration #0 and a relative offset (e.g., 2 slots) is configured for sub-configuration #1, if a k-th offset value is indicated through an activation DCI, the UE may transmit a CSI corresponding to sub-configuration #0 through a slot (e.g., slot m) corresponding to a k-th element of the reportSlotOffsetList, and may transmit a CSI corresponding to sub-configuration #1 through slot m+2.

In the embodiments described above, N, the number of occasions, and/or the position of a slot constituting each occasion and/or the reporting period and/or the reporting offset may be changed by configuring a plurality of candidate values in advance and indicating one of the candidate values through DCI or MAC CE. Here, DCI may include UE-specific DCI, UE group-common DCI, or cell-common DCI.

In [Embodiment #1-2-1] to [Embodiment #1-2-5], for the purpose of reducing a mismatch of CSI between the base station and the UE, information indicating which CSI index information is carried in each occasion may be included in the CSI report. For example, when CSI#2 information is carried in the second occasion, the UE may generate a CSI report to include information related to the index #2 and may transmit it to the base station. For example, information related to the CSI index may be included in CSI part 1.

[Embodiment #2] A scheme of configuring at least one occasion carrying CSI and controlling an amount of resources and/or information items included differently per occasion when a UE includes CSI(s) corresponding to a plurality of numbers of APs values and/or a plurality of power offset values for one CSI report

In [Embodiment #1] described above, it was assumed that time/frequency resources allocated to each occasion are the same. However, by allocating relatively more time/frequency resources to a specific occasion in which a relatively larger amount of CSI may be carried, it is possible to improve the reliability of CSI reporting and to provide more information to the base station.

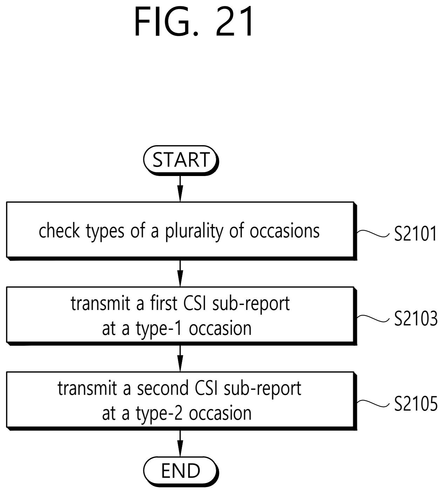

FIG. 21 illustrates an example of a procedure for reporting CSIs for sub-configurations in a plurality of occasions having different resource sizes according to an embodiment of the present disclosure. FIG. 21 exemplifies a method performed by a UE.

Referring to FIG. 21, in step S2101, the UE checks types of a plurality of occasions. Here, the types are classified based on an amount of resources allocated for the occasion (e.g., the number of REs/PRBs/OFDM symbols/carriers). That is, any occasion may be configured with a relatively larger amount of resources than another occasion. The types of occasions may be directly or indirectly indicated/configured through configuration information related to the occasions, for example, configuration information related to CSI reporting.

In step S2103, the UE transmits a first CSI sub-report in a type-1 occasion. The first CSI sub-report transmitted in the type-1 occasion may include information for more items compared to a type-2 occasion, or may include at least a part of information included in a plurality of CSIs. In this case, at least a part of the information included in the first CSI sub-report may be transmitted in a compressed state.

In step S2105, the UE transmits a second CSI sub-report in a type-2 occasion. The second CSI sub-report transmitted in the type-2 occasion may include information for fewer items compared to a type-1 occasion, or may include at least a part of information included in one CSI. For example, transmission of a CSI sub-report in the type-2 occasion may be performed more frequently than in the type-1 occasion. That is, one type-1 occasion and a plurality of type-2 occasions may form one period.

As in the embodiment described with reference to FIG. 21, CSIs may be transmitted in occasions configured with different amounts of resources. Hereinafter, the present disclosure describes embodiments of configuring occasions and utilizing the configured occasions.

For example, although 5 PRBs of PUCCH/PUSCH resources are allocated for P/SP-CSI reporting, it may be configured/indicated that 10 PRBs are allocated for one occasion every N periods or N occasions. As another example, although 6 OFDM symbols of PUCCH/PUSCH resources are allocated for P/SP-CSI reporting, it may be configured/indicated that 11 OFDM symbols are allocated for one occasion every N periods or N occasions. As another example, for a plurality of PUSCH resources allocated for A-CSI reporting, 11 OFDM symbols may be allocated for a specific PUSCH, and 6 OFDM symbols may be allocated for the remaining PUSCH(s).

Alternatively, an amount of resources may be opportunistically changed for a certain interval through DCI, group-common DCI, or MAC-CE. That is, for a certain interval, an amount of resources of an occasion for transmitting CSI may be temporarily changed. For example, although 5 PRBs of PUCCH/PUSCH resources are allocated for P/SP-CSI reporting, it may be indicated to the UE through DCI, group-common DCI, or MAC-CE that the amount of resources increases to 10 PRBs. In this case, until a separate indication is provided, the increased amount of resources may be maintained, or may be decreased back to 5 PRBs after a certain time.

As in the examples described above, a PUSCH/PUCCH to which a relatively larger amount of resources is allocated (hereinafter, 'type-1 PUXCH', 'type-1 uplink resource', or 'type-1 occasion') and a PUSCH/PUCCH to which a relatively smaller amount of resources is allocated (hereinafter, 'type-2 PUXCH', 'type-2 uplink resource', or 'type-2 occasion') may be operated. In this case, a configuration method of CSI reporting between the type-1 PUXCH and the type-2 PUXCH may be different. In the following description, it is explained that three CSIs (e.g., CSI#1/2/3) correspond to a single CSI report, but the embodiments described below may also be applied when a different number of CSI(s) correspond to a single CSI report.

In the type-1 PUXCH, information of CSI#1/2/3 may be carried. Alternatively, information of CSI#1/2/3 may be carried, but compressed information may be carried for each CSI or for some CSI indices. For example, compression may be performed by configuring CSI only with WB PMI and/or CQI without SB PMI and/or CQI, by varying granularity for a basis in a time domain/frequency domain/spatial domain, by omitting part of the information, or by configuring with a baseline value and differential values. Alternatively, in the case of beam management related reporting such as L1-RSRP or L1-SINR, compression may be performed by reducing the number of CRI/RSRP/SINR values per CSI index.

In the type-2 PUXCH, only information for a specific CSI index may be carried. The specific CSI index may be predefined (e.g., the smallest CSI index, the largest CSI index, the smallest CSI sub-configuration index, the largest CSI sub-configuration index, etc.) or may be configured through higher layer signaling. Alternatively, the specific CSI index may be differently configured per occasion.

Meanwhile, the type-1 PUXCH may be implemented as a PUCCH for multi-CSI. Specifically, when a PUCCH for multi-CSI (e.g., a PUCCH configured to transmit a plurality of CSI reports) exists within a PUCCH slot configured for P/SP-CSI reporting, the UE may transmit CSIs by using the PUCCH for multi-CSI as a container. In this case, the PUCCH for multi-CSI may mean the type-1 PUXCH. Here, the PUCCH configured to transmit a plurality of CSI reports may be used for transmitting CSIs per sub-configuration not only when it is configured for transmitting CSIs per sub-configuration but also when it is configured for a single CSI report.

Alternatively, the type-1 PUXCH may be implemented as a configured grant (CG) PUSCH or a dynamic grant (DG) PUSCH. Specifically, when a PUSCH of the same carrier or a different carrier is allocated within a PUCCH slot configured for P/SP-CSI reporting, CSI reporting may be multiplexed through the PUSCH. In this case, the PUSCH may mean the type-1 PUXCH.

In this embodiment, for the purpose of reducing a mismatch of CSI between the base station and the UE, information indicating which CSI index information is carried in each occasion may be included in the CSI report. For example, for the type-2 PUXCH, when CSI#2 is carried in a specific occasion, the UE may generate a CSI report to include information related to index #2 and may transfer it to the base station. For example, information related to the CSI index may be included in CSI part 1.

[Embodiment #3] In a case where WB reporting is configured for PMI and/or CQI, a scheme of configuring a single CSI report without dividing CSI into Part 1 and Part 2

Hereinafter, [Table 13] shows a definition of mapping of CSI fields of CSI reporting, excerpted from the TS 38.212 document.

[Table 13]

Table 6.3.1.1.2-7: Mapping order of CSI fields of one CSI report, pmi-FormatIndicator=widebandPMI and cqi-Format Indicator=widebandCQI or reportQuantity set to 'cri-RI-CQI' and cqi-FormatIndicator=widebandCQI

| CSI report number | CSI fields |
|---|---|
| CSI report #n | CRI as in Tables 6.3.1.1.2-3/4, if reported |
| | Rank Indicator as in Tables 6.3.1.1.2-3/4, if reported |
| | Layer Indicator as in Tables 6.3.1.1.2-3/4, if reported |
| | Zero padding bits $O_P$, if needed |
| | PMI wideband information fields $X_1$, from left to right as in Tables 6.3.1.1.2-1/2, if reported |
| | PMI wideband information fields $X_2$, from left to right as in Tables 6.3.1.1.2-1/2, or codebook index for 2 antenna ports according to Clause 5.2.2.2.1 in [6, TS38.214], if reported |
| | Wideband CQI for the first TB as in Tables 6.3.1.1.2-3/4, if reported |
| | Wideband CQI for the second TB as in Tables 6.3.1.1.2-3/4, if reported |

The number of zero padding bits $O_P$ in Table 6.3.1.1.2-7 is 0 for 1 CSI-RS port and $O_P = N_{max} - N_{reported}$ for more than 1 CSI-RS port, where

- $N_{max} = \max_{r \in S_{Rank}} B(r)$ and $S_{Rank}$ is the set of rank values $r$ that are allowed to be reported;

- $N_{reported} = B(R)$, where $R$ is the reported rank;

- For 2 CSI-RS ports, $B(r) = N_{PMI}(r) + N_{CQI}(r) + N_{LI}(r)$;

- For more than 2 CSI-RS ports, $B(r) = N_{PMI,i1}(r) + N_{PMI,i2}(r) + N_{CQI}(r) + N_{LI}(r)$;

- if PMI is reported, $N_{PMI}(1) = 2$ and $N_{PMI}(2) = 1$; otherwise, $N_{PMI}(r) = 0$;

- if PMI $i1$ is reported, $N_{PMI,i1}(r)$ is obtained according to Tables 6.3.1.1.2-1/2; otherwise, $N_{PMI,i1}(r) = 0$;

- if PMI $i2$ is reported, $N_{PMI,i2}(r)$ is obtained according to Tables 6.3.1.1.2-1/2; otherwise, $N_{PMI,i2}(r) = 0$;

- if CQI is reported, $N_{CQI}(r)$ is obtained according to Tables 6.3.1.1.2-3/4; otherwise, $N_{CQI}(r) = 0$;

- if LI is reported, $N_{LI}(r)$ is obtained according to Tables 6.3.1.1.2-3/4; otherwise, $N_{LI}(r) = 0$.

As shown in [Table 13], one CSI report may include CRI, RI, LI, zero padding bits, WB PMI, WB CQI, and the like. Here, according to a combination of actually reported CRI/RI values, the number of bits of LI, PMI, and/or CQI may vary. If the number of bits of the one CSI report is variable, a problem may occur in that the base station cannot properly decode information of the CSI report. To solve such a problem, by defining zero padding bits, an entire payload size of the one CSI report may be maintained constant even if the CRI/RI values vary.

Hereinafter, the present disclosure proposes a technique of configuring one CSI report when feeding back to the base station a CSI report including CSI(s) corresponding to N sub-configuration(s), where N is equal to or greater than 1 and equal to or less than L, among L sub-configurations for CSI report #n according to one of option #1/2/3.

According to one embodiment, a method of generating a CSI report to include information corresponding to all sub-configurations for each CSI content may be considered. Specifically, as shown in [Table 14], CSI may be configured.

[Table 14]

| CSI report number | CSI field |
|---|---|
| CSI report #n | CRI values corresponding to N sub-settings, if reported |
| CSI report #n | RI values corresponding to N sub-settings, if reported |
| CSI report #n | LI values corresponding to N sub-settings, if reported |
| CSI report #n | zero padding bits, if needed |
| CSI report #n | "wideband information fields" corresponding to N sub-settings, if reported |
| CSI report #n | "CQI for the first/second TB" values corresponding to N sub-settings, if reported |

In this case, zero padding bits $O_p$ may be defined as a difference between a maximum payload $N_{max}$ considering all rank combinations per sub-configuration allowed to be reported and a payload $N_{reported}$ considering rank combinations per sub-configuration actually reported. As one example, the maximum payload $N_{max}$ and the payload $N_{reported}$ may be defined as shown in [Table 15] below.

[Table 15]

- $N_{max} = \max_{r \in S_{Rank}} B(r)$ and $S_{Rank}$ is the set of rank combination values of r = {$r_1$, $r_2$,.., $r_N$} that are allowed to be reported for N sub-configurations;

- $N_{reported}$ = B(R) where R is the reported rank combination for N sub-configurations;

- $B(r) = \sum_{n=1}^{N} Z(r_n)$

- For n-th sub-configuration associated with 2 CSI-RS ports, $Z(r_n) = N_{PMI}(r_n) + N_{CQI}(r_n) + N_{LI}(r_n)$;

- For n-th sub-configuration associated with more than 2 CSI-RS ports, $Z(r_n) = N_{PMI,i1}(r_n) + N_{PMI,i2}(r_n) + N_{CQI}(r_n) + N_{LI}(r_n)$ ;

- if PMI is reported for n-th sub-configuration, $N_{PMI}(r_n = 1) = 2$ and $N_{PMI}(r_n = 2) = 1$; otherwise, $N_{PMI}(r_n) = 0$;

- if PMI $i_1$ is reported for n-th sub-configuration, $N_{PMI,i1}(r_n)$ is obtained according to Tables 6.3.1.1.2-1; otherwise, $N_{PMI,i1}(r_n) = 0$;

- if PMI $i_2$ is reported for n-th sub-configuration, $N_{PMI,i2}(r_n)$ is obtained according to Tables 6.3.1.1.2-1; otherwise, $N_{PMI,i2}(r_n) = 0$;

- if CQI is reported for n-th sub-configuration, $N_{CQI}(r_n)$ is obtained according to Tables 6.3.1.1.2-3A; otherwise, $N_{CQI}(r_n) = 0$;

- if LI is reported for n-th sub-configuration, $N_{LI}(r_n)$ is obtained according to Tables 6.3.1.1.2-3A; otherwise, $N_{LI}(r_n) = 0$.

According to an embodiment, after configuring CSI content corresponding to one sub-configuration, by concatenating information corresponding to all sub-configurations, a scheme of configuring an entire CSI may be considered. Specifically, CSI may be configured as shown in [Table 16] below. [Table 16] shows an example of a case configured with two sub-configurations.

[Table 16]

| CSI report number | CSI field | |
|---|---|---|
| CSI report #n | Sub-configuration #1 | CRI as in Tables 6.3.1.1.2-3/4, if reported |
| CSI report #n | Sub-configuration #1 | Rank Indicator as in Tables 6.3.1.1.2-3/4, if reported |
| CSI report #n | Sub-configuration #1 | Layer Indicator as in Tables 6.3.1.1.2-3/4, if reported |
| CSI report #n | Sub-configuration #1 | Zero padding bits OP, if needed |
| CSI report #n | Sub-configuration #1 | PMI wideband information fields X1, from left to right as in Tables 6.3.1.1.2-1/2, if reported |
| CSI report #n | Sub-configuration #1 | PMI wideband information fields X2, from left to right as in Tables 6.3.1.1.2-1/2, or codebook index for 2 antenna ports according to Clause 5.2.2.2.1 in [6, TS38.214], if reported |
| CSI report #n | Sub-configuration #1 | Wideband CQI for the first TB as in Tables 6.3.1.1.2-3/4, if reported |
| CSI report #n | Sub-configuration #1 | Wideband CQI for the second TB as in Tables 6.3.1.1.2-3/4, if reported |
| CSI report #n | Sub-configuration #2 | CRI as in Tables 6.3.1.1.2-3/4, if reported |
| CSI report #n | Sub-configuration #2 | Rank Indicator as in Tables 6.3.1.1.2-3/4, if reported |
| CSI report #n | Sub-configuration #2 | Layer Indicator as in Tables 6.3.1.1.2-3/4, if reported |
| CSI report #n | Sub-configuration #2 | Zero padding bits OP,if needed |
| CSI report #n | Sub-configuration #2 | PMI wideband information fields X1, from left to right as in Tables 6.3.1.1.2-1/2,if reported |
| CSI report #n | Sub-configuration #2 | PMI wideband information fields X2, from left to right as in Tables 6.3.1.1.2-1/2, or codebook index for 2 antenna ports according to Clause 5.2.2.2.1 in [6, TS38.214], if reported |
| CSI report #n | Sub-configuration #2 | Wideband CQI for the first TB as in Tables 6.3.1.1.2-3/4, if reported |
| CSI report #n | Sub-configuration #2 | Wideband CQI for the second TB as in Tables 6.3.1.1.2-3/4, if reported |

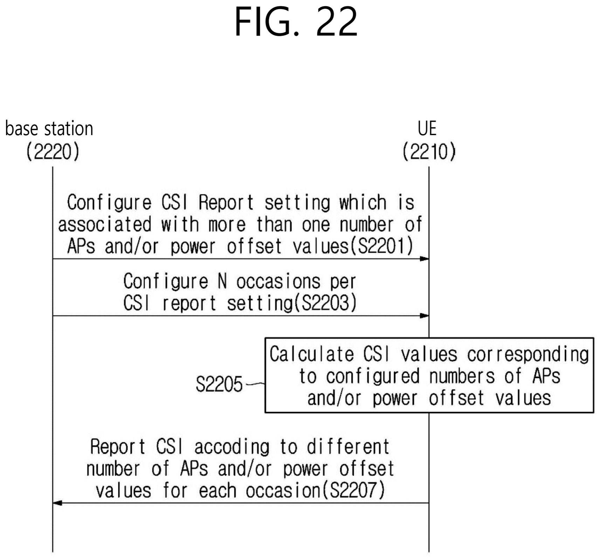

FIG. 22 illustrates an example of a procedure for transmitting CSI reporting based on sub-configurations according to an embodiment of the present disclosure. FIG. 22 illustrates signal exchange between a UE 2210 and a base station 2220.

Referring to FIG. 22, in step S2201, the base station 2220 transmits configuration information on CSI report configuration to the UE 2210. Here, the CSI report configuration is related to at least one AP number and/or at least one power offset value.

In step S2203, the base station 2220 transmits configuration information on N occasions per CSI report configuration to the UE 2210. In other words, the base station 2220 configures a plurality of occasions for one CSI report. Here, each occasion is used for transmitting one CSI sub-report. The CSI sub-report may correspond to one sub-configuration or may correspond to a combination of a plurality of sub-configurations.

In step S2205, the UE 2210 calculates CSI values. Here, the CSI values correspond to at least one number of AP and/or at least one power offset value. In other words, CSIs corresponding to sub-configuration(s) determined by the configured number(s) of APs and/or the configured power offset value(s) are calculated.

In step S2207, the UE 2210 reports CSIs. The CSIs correspond to different number(s) of APs and/or power offset value(s), and are transmitted in each occasion. According to one embodiment, one CSI may be transmitted in one occasion. According to another embodiment, a CSI sub-report formed by a combination of CSIs may be transmitted in one occasion.

The proposed methods described above may be implemented independently, but may also be implemented in a form of combination (or merging) of some proposed methods. Information on whether the proposed methods are applied (or information on rules of the proposed methods) may be defined by a rule such that the base station informs the UE through a predefined signal (e.g., a physical layer signal or a higher layer signal).

The present disclosure may be embodied in other specific forms without departing from the technical idea and essential features described herein. Therefore, the above detailed description should not be interpreted in a limiting sense in all aspects and should be considered as illustrative. The scope of the present disclosure should be determined by a reasonable interpretation of the appended claims, and all modifications within the equivalent scope of the present disclosure are included in the scope of the present disclosure. In addition, claims having no explicit reference relationship in the claims may be combined to constitute an embodiment, or may be included as new claims through amendment after filing.

## INDUSTRIAL APPLICABILITY

The embodiments of the present disclosure may be applied to various wireless access systems. Examples of various wireless access systems include 3GPP (3rd Generation Partnership Project) systems or 3GPP2 systems.

The embodiments of the present disclosure may be applied not only to the above various wireless access systems but also to all technical fields to which the above various wireless access systems are applied. Furthermore, the proposed method may be applied to mmWave and THz communication systems using an ultra-high frequency band.

Additionally, the embodiments of the present disclosure may be applied to various applications such as autonomous vehicles and drones.

## Claims

1. A method performed by a user equipment (UE) in a wireless communication system, the method comprising:

   receiving configuration information for a channel state information (CSI) report including a list of a plurality of sub-configurations; and
   transmitting, to a base station, at least one CSI including a measurement result based on at least one CSI-RS related to the CSI report,
   wherein the sub-configurations are divided by at least one of a related power offset or a number of antenna ports,
   wherein a first CSI sub-report determined based on the at least one CSI is transmitted at a first occasion among occasions determined based on the configuration information, and
   wherein a second CSI sub-report determined based on the at least one CSI is transmitted at a second occasion among the occasions.

2. The method of claim 1,
   wherein the occasions are included in slots belonging to a plurality of periods for periodic (P)/semi-persistent (SP) CSI report indicated by the configuration information.

3. The method of claim 1,
   wherein the occasions are included in slots belonging to at least one period for P/SP CSI report indicated by the configuration information.

4. The method of claim 1,
   wherein the occasions are included in a plurality of uplink slots indicated by an uplink grant for aperiodic (AP) CSI report indicated by the configuration information.

5. The method of claim 1,

   wherein the first CSI sub-report includes a first CSI corresponding to a first sub configuration among the sub-configurations, and
wherein the second CSI sub-report includes a second CSI corresponding to a second sub configuration among the sub-configurations.

6. The method of claim 1,

wherein the first CSI sub-report includes common information of CSIs corresponding to the sub-configurations, and
wherein the second CSI sub-report includes a remainder excluding the common information from CSI corresponding to one of the sub-configurations

7. The method of claim 1,

wherein the first CSI sub-report includes a baseline value of at least one item of CSIs corresponding to the sub-configurations, and
wherein the second CSI sub-report includes a differential value for the baseline value of the at least one item of CSI corresponding to one of the sub-configurations.

8. The method of claim 1,

wherein the first CSI sub-report includes all items of a first CSI and at least one of items of at least one remaining CSI among CSIs corresponding to the sub-configurations, and
wherein the second CSI sub-report includes all items of a second CSI and at least one of items of at least one remaining CSI among CSIs corresponding to the sub-configurations.

9. The method of claim 1,

wherein the first CSI sub-report includes compressed information of CSIs corresponding to the sub-configurations, and
wherein the second CSI sub-report includes a first CSI among the CSIs corresponding to the sub-configurations.

10. The method of claim 1,
wherein the configuration information includes a period parameter and an offset parameter indicating a slot including resources for each of the sub-configurations.

11. The method of claim 1,

wherein a first uplink resource for the first CSI sub-report is configured in relatively greater amount than a second uplink resource for the second CSI sub-report,
wherein the first CSI sub-report includes CSIs corresponding to the sub-configurations or compressed information of the CSIs, and
wherein the second CSI sub-report includes a first CSI among the CSIs corresponding to the sub-configurations.

12. A user equipment (UE) in a wireless communication system, comprising:

a transceiver; and
a processor connected to the transceiver,
wherein the processor is configured to:

receive configuration information for a channel state information (CSI) report including a list of a plurality of sub-configurations; and
transmit, to a base station, at least one CSI including a measurement result based on at least one CSI-RS related to the CSI report,
wherein the sub-configurations are divided by at least one of a related power offset or a number of antenna ports,
wherein a first CSI sub-report determined based on the at least one CSI is transmitted at a first occasion among occasions determined based on the configuration information, and
wherein a second CSI sub-report determined based on the at least one CSI is transmitted at a second occasion among the occasions.

13. A communication device comprising:

at least one processor; and
at least one computer memory connected to the at least one processor and storing instructions that direct operations when executed by the at least one processor, the operations comprising:

receiving configuration information for a channel state information (CSI) report including a list of a plurality of sub-configurations; and
transmitting, to a base station, at least one CSI including a measurement result based on at least one CSI-RS related to the CSI report,
wherein the sub-configurations are divided by at least one of a related power offset or a number of antenna ports,
wherein a first CSI sub-report determined based on the at least one CSI is transmitted at a first occasion among occasions determined based on the configuration information, and
wherein a second CSI sub-report determined based on the at least one CSI is transmitted at a second occasion among the occasions.

14. A non-transitory computer-readable medium storing at least one instruction, the at least one instruction being executable by a processor, the at least one instruction causing a device, the processor, to:

receive configuration information for a channel state information (CSI) report including a list of a plurality of sub-configurations; and
transmit, to a base station, at least one CSI including a measurement result based on at least one CSI-RS related to the CSI report,
wherein the sub-configurations are divided by at least one of a related power offset or a number of antenna ports,
wherein a first CSI sub-report determined based on the at least one CSI is transmitted at a first occasion among occasions determined based on the configuration information, and
wherein a second CSI sub-report determined based on the at least one CSI is transmitted at a second occasion among the occasions.

# FIG. 1

# FIG. 2

200

208

202

206

First Device

Processor(s)

Transceiver(s)

Memory(s)

204

# FIG. 3

# FIG. 4

One Subframe

$14 \cdot 2^{\mu}$ OEDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG. 5

# FIG. 6

Resource grid

A carrier
(up to 3300 subcarriers, i.e, 275 RBs)

A BWP

1 RB=12 subcarrier

1 RE

1 subcarrier

1 symbol

l=0 ・・・

k=0

# FIG. 7

INITIAL CELL SEARCH

PSS/SSS& [DLRS]& PBCH

S701

SYSTEM INFORMATION RECEPTION

PDCCH/ PDSCH (BCCH)

S702

RANDOM ACCESS PROCEDURE

PRACH

S703

PDCCH/ PDSCH

S704

PUSCH

S705

PDCCH/ PDSCH

S706

GENERAL DL/UL Tx/Rx

PDCCH/ PDSCH

S707

PUSCH/ PUCCH

S708

- DL/UL ACK/NACK
- UE CQI/PMI RI REPORT USING PUSCH AND PUCCH

# FIG. 8

# FIG. 9

# FIG. 10

# FIG. 11

(a)                          (b)

# FIG. 12

UE ——————————————————————————— base station

NZP CSI-RS resource set IE(S610)

receive CSI resource(s) configured
as Repetition 'ON',
through same Tx beam (S620)

| determine Rx beam | — S630

skip CSI report  (No report)(S640)

# FIG. 13

UE ——————————————————————————— base station

NZP CSI-RS resource set IE(S710)

receive CSI resource(s) configured
as Repetition 'OFF',
through different Tx beam (S720)

| determine best beam | — S730

repot CSI  (CRI/L1-RSRP)(S740)

# FIG. 14

# FIG. 15

base station RX beam sweeping

base station RX beam fixation

UE TX beam sweeping

(a)

(b)

# FIG. 16

UE                                                              base station

SRS Config. IE
(usage BM, SRS-Spatial
Relation Info)(S1010)

determine Tx beam
for SRS resource          ~S1020

transmit SRS through
determined Tx beam (S1030)

feedback(S1040)

# FIG. 17

START

IDENTIFY NES SOLUTION(S)

PERFORM SIGNALING FOR NES

PERFORM OPERATIONS FOR NES

END

# FIG. 18

TERMINAL           BASE STATION

CONFIGURATION INFORMATION FOR CSI

CSI-RS

DETERMINE CSI

CSI REPORT

# FIG. 19a

on/off adaptation

# FIG. 19b

on/off adaptation

# FIG. 19c

on/off adaptation

# FIG. 20

START

receive configuration information
for CSI report — S2001

generate CSIs based on sub-configurations — S2003

determine a plurality of
occasions for the CSIs — S2005

transmit CSIs — S2007

END

# FIG. 21

START

check types of a plurality of occasions — S2101

transmit a first CSI sub-report
at a type-1 occasion — S2103

transmit a second CSI sub-report
at a type-2 occasion — S2105

END

# FIG. 22

base station
(2220)

UE
(2210)

Configure CSI Report setting which is
associated with more than one number of
APs and/or power offset values(S2201)

Configure N occasions per
CSI report setting(S2203)

S2205 —

Calculate CSI values corresponding
to configured numbers of APs
and/or power offset values

Report CSI accoding to different
number of APs and/or power offset
values for each occasion(S2207)